# EUROPEAN PATENT APPLICATION

(11) **EP 3 473 828 A1**
(43) Date of publication of application: **24.04.2019**
(21) Application number: 17813368.2
(22) Date of filing: 14.06.2017
(51) Int. Cl.: F01N 3/28, B62M 7/02, F01N 13/08

(54) **SADDLE-TYPE VEHICLE EQUIPPED WITH ONE FRONT WHEEL**

(30) Priority: 16.06.2016 JP 2016119780
(71) Applicant: Yamaha Hatsudoki Kabushiki Kaisha, Iwata-shi, Shizuoka 438-8501 (JP)
(72) Inventor: YAMAMOTO, Takehito, Iwata-shi Shizuoka 438-8501 (JP)
(74) Representative: Zimmermann, Tankred Klaus
(86) International application number: PCT/JP2017/022012
(87) International publication number: WO 2017/217473

(57) **Abstract**

When a vehicle is viewed rearward from the front, a downstream extension (63c) of the center line (69c) of an exhaust path (69) of a second exhaust passage member (63) connected to a combustion chamber (30) in a region leftward of the center (CV) of the vehicle is connected to a first junction point (61p) of the center line (69c) of an exhaust path (69) of a first exhaust passage member (61) which connects a combustion chamber (30) in a region rightward of the center (CV) of the vehicle to a catalyst 62a. When the vehicle is viewed rearward from the front, an angle formed between the direction of the center line (69c) of the exhaust path (69) of the first exhaust passage member (61) downstream of the first junction point (61p) and the direction of the center line (69c) of the exhaust path (69) of the first exhaust passage member (61) upstream of the first junction point (61p) falls within a range which includes 0 degrees and is smaller than an angle formed between the direction of the center line (69c) of the exhaust path (69) of the first exhaust passage member (61) downstream of the first junction point (61p) and the downstream extension (63c) of the center line (69c) of the exhaust path (69) of the second exhaust passage member (63).

## Description

### [Technical Field]

The present teaching relates to a single-front-wheel-including straddled vehicle.

### [Background Art]

Straddled vehicles are recently required to improve an exhaust gas purification performance of improving exhaust gas. For example, catalysts tend to be increased in size in consideration of deterioration of the catalysts. An example of a straddled vehicle with an upsized catalyst is disclosed in Patent Literature 1. The straddled vehicle recited in Patent Literature 1 includes a water-cooled parallel two-cylinder engine. In the following description, a left-right direction of a vehicle, a front-rear direction of a vehicle, and an up-down direction of a vehicle may be simply referred to as a left-right direction, a front-rear direction, and an up-down direction, respectively. The straddled vehicle of Patent Literature 1 includes an exhaust gas outlet which is provided at the center of the vehicle in the left-right direction. The exhaust gas outlet is connected to an exhaust gas introduction portion. The exhaust gas introduction portion extends downward from its exhaust gas outlet when the vehicle is viewed rearward from the front. A downstream portion of the exhaust gas introduction portion is connected to a catalyst case housing portion. The catalyst case housing portion is larger in diameter than the exhaust gas introduction portion. A catalyst case is housed in the catalyst case housing portion. An upstream portion of the catalyst case housing portion is at the center of the vehicle in the left-right direction. A downstream portion of the catalyst case housing portion is in a region which is leftward of the center of the vehicle in the left-right direction. The downstream portion of the catalyst case housing portion is connected to an exhaust pipe. An engine main body of Patent Literature 1 is provided so that the central axis of a cylinder hole formed in a cylinder body is along the front-rear direction. The catalyst case housing portion is provided directly below the cylinder body and a cylinder head. The catalyst case housing portion is provided in front of the engine main body.

### [Citation List]

### [Patent Literatures]

[Patent Literature 1] Japanese Unexamined Patent Publication No. 2012-121418

### [Summary of Invention]

### [Technical Problem]

In the straddled vehicle of Patent Literature 1, the catalyst case housing portion is provided in front of the engine main body. A front wheel is also provided in front of the engine main body. The engine main body and the catalyst case housing portion must be arranged to avoid interference with the front wheel. The vehicle is therefore disadvantageously upsized in the front-rear direction.

An object of the present teaching is to provide a straddled vehicle with a catalyst provided in front of an engine main body, in which upsizing of the vehicle in the front-rear direction is avoided while the exhaust gas purification performance of the vehicle is improved.

### [Solution to Problem]

The inventors of the subject application conducted a detailed analysis on the layout of a straddled vehicle on which a catalyst unit including a large catalyst was mounted and which includes a single front wheel. As a result, the inventors noticed that an exhaust gas introduction portion and an upstream portion of the catalyst unit, which were provided at the center of the vehicle in the left-right direction, were factors of upsizing of the vehicle in the front-rear direction. A straddled vehicle includes a single front wheel which is provided at the center of the vehicle in the left-right direction. This front wheel is a steered wheel. When the front wheel is steered, the location of a rear portion of the front wheel is changed in the front-rear direction. The rear portion of the front wheel at the center of the vehicle in the left-right direction is rearward of the rear portion of the front wheel in a region leftward of or rightward of the center of the vehicle. On this account, at the center of the vehicle in the left-right direction, the engine main body and the upstream portion of the catalyst unit must be arranged to avoid interference with the front wheel. Due to this, the straddled vehicle, on which the catalyst unit including the large catalyst, is disadvantageously upsized in the front-rear direction.

The interference can be avoided by providing the upstream portion of the catalyst unit in a region which is leftward of or rightward of the center of the vehicle in the left-right direction. However, exhaust passage members provided between combustion chambers of the engine main body and the catalyst cannot be arranged symmetrically in the left-right direction when the vehicle is viewed rearward from the front. Because exhaust gas flowing into the catalyst is biased, it is not possible to efficiently utilize the entirety of the catalyst. Upsizing of the catalyst is therefore unavoidable. In fact, in the straddled vehicle of Patent Literature 1, the exhaust gas outlet of the engine main body and the catalyst case housing portion are provided at the center in the left-right direction when the vehicle is viewed rearward from the front. To put it differently, exhaust passage members between combustion chambers of the engine main body and the catalyst are arranged to be symmetrical in the left-right direction. This arrangement equalizes the flows of exhaust gas from the combustion chambers into the catalyst in the left-right direction so as to avoid bias of the flow of the exhaust gas. It is therefore possible to effectively utilize the catalyst and to restrain the catalyst from being upsized.

The inventors of the subject application tried to achieve both improvement in the exhaust gas purification performance of the vehicle and suppression of upsizing of the vehicle in the front-rear direction, by securing the degree of freedom in layout of the upstream portion of the catalyst in the left-right direction. In order to achieve this object, the inventors tried to find a structure with which bias of the flow of exhaust gas in the left-right direction was adjustable. The inventors then found that an influence of the bias of the flow of exhaust gas in the left-right direction could be restrained by combining the following four arrangements. The technical idea is, instead of avoiding the bias of the flow of exhaust gas throughout the exhaust passage members, the bias of the flow of exhaust gas is ultimately restrained at around the entrance into the catalyst by adjusting the bias of flow of exhaust gas in the left-right direction. This technical idea is different from the technical idea of Patent Literature 1 in which the exhaust passage members are arranged to be symmetrical in the left-right direction in order to avoid the bias of the flow of exhaust gas.

(1) The present teaching includes the following four arrangements.

Firstly, a straddled vehicle of the present teaching is arranged as below. The straddled vehicle includes a vehicle body frame. The straddled vehicle includes an engine main body which is supported by the vehicle body frame and includes a plurality of combustion chambers and cylinder holes lined up in a left-right direction of the vehicle, wherein each of the cylinder holes partially form a combustion chamber. The straddled vehicle includes the single front wheel which is provided in front of the engine main body in a front-rear direction of the vehicle and at the center of the vehicle in the left-right direction, the single front wheel being steerable in the left-right direction. The straddled vehicle includes at least one rear wheel which is provided behind the engine main body in the front-rear direction. The straddled vehicle includes a catalyst unit which is at least partially provided between the engine main body and the single front wheel when the vehicle is viewed rightward from the left or leftward from the right, the catalyst unit including a catalyst configured to purify exhaust gas exhausted from at least two of the plurality of combustion chambers, the catalyst being arranged so that an upstream portion is positioned upstream in a flow of the exhaust gas and a downstream portion is positioned downstream in the flow of the exhaust gas, a front end of the upstream portion in the front-rear direction being forward of a front end of the downstream portion in the front-rear direction, and the front end of the upstream portion being above the front end of the downstream portion in an up-down direction of the vehicle; and the straddled vehicle includes an exhaust passage member which forms an exhaust path in which the exhaust gas exhausted from the plurality of combustion chambers flows,

Secondly, each of the cylinder holes being arranged so that, when the vehicle is viewed rightward from the left or leftward from the right, an angle formed between a central axis of each of the cylinder holes and the up-down direction is equal to or smaller than 45 degrees and is equal to or smaller than an angle formed between the flow direction of the exhaust gas in the catalyst and the up-down direction, with this arrangement, a part of the exhaust path between the combustion chamber and the upstream portion of the catalyst has a certain length. Because this part of the exhaust path has the certain length, an arrangement for improving the bias in the left-right direction of the flow of exhaust gas can be employed.

Thirdly, when the vehicle is viewed rearward from the front, the catalyst is provided so that the center in the left-right direction of the upstream portion of the catalyst is in a region which is leftward of or rightward of the center of the vehicle in the left-right direction. With this arrangement, when the vehicle is viewed rearward from the front, the linear distances between the combustion chambers and the upstream portion of the catalyst are different from one another. To put it differently, these parts of the exhaust path are not symmetrical in the left-right direction. In other words, the flow of exhaust gas is biased. However, interference between the upstream portion of the catalyst and the front wheel is easily avoidable.

Fourthly, the exhaust passage member is arranged as below. The exhaust passage member includes a first exhaust passage member which connects a first combustion chamber of the combustion chambers to the upstream portion of the catalyst, the first combustion chamber being disposed so that the central axis of the cylinder hole is provided in a first region which is leftward of or rightward of the center of the vehicle in the left-right direction. The exhaust passage member includes a second exhaust passage member which is connected to at least one of an upstream intermediate portion, an upstream central portion, a downstream central portion, and a downstream intermediate portion among an upstream end portion, the upstream intermediate portion, the upstream central portion, the downstream central portion, the downstream intermediate portion, and a downstream end portion which are divisional portions of the first exhaust passage member, the divisional portions dividing the first exhaust passage member into six sections and being identical with one another in length of the center line of the exhaust path, the second exhaust passage member being further connected to a second combustion chamber of the combustion chambers, the second combustion chamber being disposed so that the central axis of the cylinder hole is provided in a second region which is opposite to the first region across the center of the vehicle in the left-right direction. The exhaust passage member is arranged so that, when the vehicle is viewed rearward from the front, an angle formed between (i) the direction of the center line of an exhaust path of the first exhaust passage member downstream of a first junction point and (ii) the direction of the center line of the exhaust path of the first exhaust passage member upstream of the first junction point falls within a range which includes 0 degrees and is smaller than an angle formed between (I) the direction of the center line of the exhaust path of the first exhaust passage member downstream of the first junction point and (II) the downstream extension of the center line of the exhaust path of the second exhaust passage member, the first junction point being a point where a downstream extension of a center line of an exhaust path of the second exhaust passage member is connected to the center line of the exhaust path of the first exhaust passage member. The exhaust passage member includes an enlarged portion which is provided between the first junction point and the upstream portion of the catalyst and is arranged so that a downstream portion of the exhaust path of the enlarged portion in the flow direction of the exhaust gas is wider in the left-right direction than an upstream portion of the exhaust path of the enlarged portion. Because the second exhaust passage member is merged with the first exhaust passage member from the left or right, the flow of exhaust gas is biased. In this regard, the second exhaust passage member is not connected to the upstream end portion which is the most upstream one of the six sections of the first exhaust passage member. This prevents the flow of exhaust gas from being extremely biased. Furthermore, the second exhaust passage member is not connected to the downstream end portion which is the most downstream one of the six sections of the first exhaust passage member. With these arrangements, the exhaust path between the upstream portion of the catalyst and the junction between the first exhaust passage member and the second exhaust passage member always has a certain length. In addition to this, the enlarged portion, which is arranged so that the downstream portion of the enlarged portion is wider in the left-right direction than the upstream portion of the enlarged portion, is provided between the junction and the upstream portion of the catalyst. This restrains the bias of the flow of exhaust gas in the left-right direction.

By simultaneously combining these four arrangements, it is possible to restrain the influence of the bias of the flow of exhaust gas in the left-right direction. With the arrangement above, the upstream portion of the catalyst can be provided in the first region which is leftward of or rightward of the vehicle center, without caring about the bias of the flow of exhaust gas in the left-right direction. To put it differently, it is possible to improve the degree of freedom in the layout of the upstream portion of the catalyst in the left-right direction. Interference between the catalyst unit and the front wheel can therefore be easily avoidable even when the catalyst unit including the large catalyst is mounted. As a result, upsizing of the vehicle in the front-rear direction can be restrained while the exhaust gas purification performance of the vehicle is improved.

The front end of the downstream portion of the catalyst of the present teaching is positioned rearward of the front end of the upstream portion of the catalyst in the front-rear direction of the vehicle. On this account, interference between the downstream portion of the catalyst and the front wheel is avoided no matter whether the downstream portion of the catalyst is provided at the vehicle center, in the left region, or in the right region in the left-right direction. The downstream portion of the catalyst of the present teaching may be provided at the vehicle center, in the left region, or in the right region in the left-right direction. When the upstream portion of the catalyst is positionally different from the downstream portion of the catalyst in the left-right direction, it is easy to employ a catalyst in which the length in the flow direction of exhaust gas is relatively long as compared to the diameter. In short, the degree of freedom in the layout of the catalyst is improved. For this reason, even when the catalyst is upsized, the catalyst can be provided at a location where interference between the upstream portion of the catalyst and the front wheel is easily avoidable, in accordance with the shape of the catalyst. As a result, upsizing of the vehicle in the front-rear direction can be easily avoided. When the upstream portion of the catalyst and the downstream portion of the catalyst are provided both in the left region or both in the right region, it is easy to employ a catalyst in which the length in the flow direction of exhaust gas is relatively short as compared to the diameter. In short, the degree of freedom in the layout of the catalyst is improved. For this reason, even when the catalyst is upsized, the catalyst can be provided at a location where interference between the upstream portion of the catalyst and the front wheel is easily avoidable, in accordance with the shape of the catalyst. As a result, upsizing of the vehicle in the front-rear direction can be easily avoided.
(2) According to another aspect, the single-front-wheel-including straddled vehicle of the present teaching preferably includes the following arrangement. The exhaust passage member is provided so that, when the vehicle is viewed rightward from the left or leftward from the right, an angle formed between the direction of the center line of the exhaust path of the first exhaust passage member at the first junction point and the up-down direction is equal to or smaller than an angle formed between the central axis of each of the cylinder holes and the up-down direction.
   The junction between the first exhaust passage member and the second exhaust passage member is wide in the left-right direction. This junction which is wide in the left-right direction is provided so that its center line is close to the up-down direction as compared to the direction of the center axis of the cylinder hole. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(3) According to another aspect, the single-front-wheel-including straddled vehicle of the present teaching preferably includes the following arrangement. The exhaust passage member is provided so that, when the vehicle is viewed rightward from the left or leftward from the right, an angle formed between the direction of the center line of the exhaust path of the first exhaust passage member at the first junction point and the up-down direction is equal to or smaller than an angle formed between the flow direction of the exhaust gas in the catalyst and the up-down direction.
   The junction between the first exhaust passage member and the second exhaust passage member is wide in the left-right direction. This junction which is wide in the left-right direction is provided so that its center line is close to the up-down direction as compared to the flow direction of exhaust gas in the catalyst. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(4) According to another aspect, the single-front-wheel-including straddled vehicle of the present teaching preferably includes the following arrangement. The exhaust passage member is provided so that, when the vehicle is viewed rearward from the front, an angle formed between (a) the direction of the center line of the exhaust path at a downstream end of one or two connection sections including the first junction point among the six sections of the first exhaust passage member and (b) the direction of the center line of the exhaust path at an upstream end of the one or two connection sections falls within a range which includes 0 degrees and is smaller than an angle formed between (A) the direction of the center line of the exhaust path at the downstream end of the one or two connection sections and (B) the downstream extension of the center line of the exhaust path of the second exhaust passage member.
(5) According to another aspect, the single-front-wheel-including straddled vehicle of the present teaching preferably includes the following arrangement. The exhaust passage member includes an oxygen sensor attaching portion to which an oxygen sensor configured to detect oxygen density of the exhaust gas between the first junction point of the first exhaust passage member and the upstream portion of the catalyst is attached.
   At the junction between the first exhaust passage member and the second exhaust passage member, the flow of exhaust gas in the first exhaust passage member is biased leftward or rightward in the left-right direction. In this regard, the exhaust passage member includes the enlarged portion provided between the junction of the first exhaust passage member and the upstream portion of the catalyst. This arrangement restrains the bias of the flow of exhaust gas in the left-right direction in the exhaust path between the junction of the first exhaust passage member and the upstream portion of the catalyst. Because the oxygen density of exhaust gas is detected by utilizing this section where the bias of the flow of exhaust gas is restrained, the degree of freedom in the layout of the oxygen sensor is improved while the detection accuracy of oxygen density is secured. Therefore, interference between the oxygen sensor and the front wheel is easily avoidable, while the detection accuracy of the oxygen density is secured. As a result, upsizing of the vehicle in the front-rear direction can be restrained while the exhaust gas purification performance of the vehicle is improved.
(6) According to another aspect, the single-front-wheel-including straddled vehicle of the present teaching preferably includes the following arrangement. The oxygen sensor attaching portion includes an oxygen sensor insertion hole into which the oxygen sensor is inserted. The oxygen sensor insertion hole does not exist on the center line of the exhaust path of the first exhaust passage member when the vehicle is viewed rearward from the front.
   The oxygen sensor is therefore not provided so that the axis of the oxygen sensor is along the front-rear direction. With this arrangement, interference between the oxygen sensor and the front wheel is easily avoidable, while the detection accuracy of the oxygen density is secured. As a result, upsizing of the vehicle in the front-rear direction can be restrained while the exhaust gas purification performance of the vehicle is improved.
(7) According to another aspect, the single-front-wheel-including straddled vehicle of the present teaching preferably includes the following arrangement. The exhaust passage member includes a linear portion which is provided upstream of the first junction point and is a region where the center line of the exhaust path of a part of the first exhaust passage member and the center line of the exhaust path of a part of the second exhaust passage member are along the up-down direction and are lined up in the left-right direction when the vehicle is viewed rearward from the front.
   The linear portion is provided between the combustion chamber and the junction between the first exhaust passage member and the second exhaust passage member. With this arrangement, the degree of freedom in location of the junction between the first exhaust passage member and the second exhaust passage member is improved while the structure of the exhaust passage member between the combustion chamber and the junction between the first exhaust passage member and the second exhaust passage member is simplified. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(8) According to another aspect, the single-front-wheel-including straddled vehicle of the present teaching preferably includes the following arrangement. The exhaust passage member includes a part of the engine main body and an exhaust pipe which is detachably attached to the engine main body. The exhaust pipe is connected to the engine main body at the linear portion.
   With this arrangement, the degree of freedom in location of the junction between the first exhaust passage member and the second exhaust passage member is improved while the structure for connecting the engine main body with the exhaust pipe is simplified. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(9) According to another aspect, the single-front-wheel-including straddled vehicle of the present teaching preferably includes the following arrangement. The center in the left-right direction of the upstream portion of the catalyst is in the first region.
   The combustion chamber connected to the first exhaust passage member and the center of the upstream portion of the catalyst are both in the first region which is leftward of or rightward of the vehicle center. The first exhaust passage member is therefore linear or substantially linear when the vehicle is viewed rearward from the front. With this arrangement, the degree of freedom in location of the junction between the first exhaust passage member and the second exhaust passage member is improved while the structure of the junction is simplified. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(10) According to another aspect, the single-front-wheel-including straddled vehicle of the present teaching preferably includes the following arrangement. The center in the left-right direction of the upstream portion of the catalyst is in the second region.
   The combustion chamber connected to the first exhaust passage member and the center of the upstream portion of the catalyst are separated from each other in the left-right direction. The length of the exhaust path between the combustion chamber connected to the first exhaust passage member and the center of the upstream portion of the catalyst is therefore arranged to be advantageously long. Furthermore, because the second exhaust passage member is connected to the first exhaust passage member, the length of the exhaust path between the combustion chamber connected to the second exhaust passage member and the center of the upstream portion of the catalyst is arranged to be advantageously long.
   With this arrangement, the degree of freedom in location of the junction between the first exhaust passage member and the second exhaust passage member is improved even when the length of the exhaust passage member is taken into account. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(11) According to another aspect, the single-front-wheel-including straddled vehicle of the present teaching preferably includes the following arrangement. The exhaust passage member includes a third exhaust passage member which is connected to a part between both ends of the second exhaust passage member.
   With this arrangement, even when the engine main body includes three or more cylinder holes, the degree of freedom in location of the junction between the first exhaust passage member and the second exhaust passage member is improved while the structure of the junction between the first exhaust passage member and the second exhaust passage member and the structure of the junction between the second exhaust passage member and the third exhaust passage member are simplified. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(12) According to another aspect, the single-front-wheel-including straddled vehicle of the present teaching preferably includes the following arrangement. The exhaust passage member is provided so that, when the vehicle is viewed rearward from the front, an angle formed between (c) the direction of the center line of the exhaust path of the second exhaust passage member downstream of a second junction point where a downstream extension of a center line of an exhaust path of the third exhaust passage member is connected to the center line of the exhaust path of the second exhaust passage member and (d) the direction of the center line of the exhaust path of the second exhaust passage member upstream of the second junction point falls within a range which includes 0 degrees and is smaller than an angle formed between (C) the direction of the center line of the exhaust path of the second exhaust passage member downstream of the second junction point and (D) the downstream extension of the center line of the exhaust path of the third exhaust passage member, the second junction point being a point where a downstream extension of a center line of an exhaust path of the third exhaust passage member is connected to the center line of the exhaust path of the second exhaust passage member.
   With this arrangement, even when the engine main body includes three or more cylinder holes, the degree of freedom in location of the junction between the first exhaust passage member and the second exhaust passage member is improved while the structure of the junction between the first exhaust passage member and the second exhaust passage member and the structure of the junction between the second exhaust passage member and the third exhaust passage member are simplified. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(13) According to another aspect, the single-front-wheel-including straddled vehicle of the present teaching preferably includes the following arrangement. The exhaust passage member includes a fourth exhaust passage member which is connected to a part between both ends of the first exhaust passage member.
   With this arrangement, even when the engine main body includes three or more cylinder holes, the degree of freedom in location of the junction between the first exhaust passage member and the second exhaust passage member is improved while the structure of the junction between the first exhaust passage member and the second exhaust passage member and the structure of the junction between the first exhaust passage member and the fourth exhaust passage member are simplified. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(14) According to another aspect, the single-front-wheel-including straddled vehicle of the present teaching preferably includes the following arrangement. The exhaust passage member is provided so that, when the vehicle is viewed rearward from the front, an angle formed between (e) the direction of the center line of the exhaust path of the first exhaust passage member downstream of a third junction point where a downstream extension of a center line of an exhaust path of the fourth exhaust passage member is connected to the center line of the exhaust path of the first exhaust passage member and (f) the direction of the center line of the exhaust path of the first exhaust passage member upstream of the third junction point falls within a range which includes 0 degrees and is smaller than an angle formed between (E) the direction of the center line of the exhaust path of the first exhaust passage member downstream of the third junction point and (F) the downstream extension of the center line of the exhaust path of the fourth exhaust passage member, the third junction point being a point where a downstream extension of a center line of an exhaust path of the fourth exhaust passage member is connected to the center line of the exhaust path of the first exhaust passage member.
   With this arrangement, even when the engine main body includes three or more cylinder holes, the degree of freedom in location of the junction between the first exhaust passage member and the second exhaust passage member is improved while the structure of the junction between the first exhaust passage member and the second exhaust passage member and the structure of the junction between the first exhaust passage member and the fourth exhaust passage member are simplified. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(15) According to another aspect, the single-front-wheel-including straddled vehicle of the present teaching preferably includes the following arrangement, in addition to the arrangement (11). When the second exhaust passage member is divided into six second sections which are identical with one another in the length of the center line of the exhaust path, the exhaust passage member is provided so that, when the vehicle is viewed rearward from the front, an angle formed between (1) the direction of the center line of the exhaust path at a downstream end of one or two second connection sections including the second junction point among the six second sections of the second exhaust passage member and (2) the direction of the center line of the exhaust path at an upstream end of the one or two second connection sections falls within a range which includes 0 degrees and is smaller than an angle formed between (3) the direction of the center line of the exhaust path at the downstream end of the one or two second connection sections and (4) the downstream extension of the center line of the exhaust path of the third exhaust passage member.
   With this arrangement, even when the engine main body includes three or more cylinder holes, the degree of freedom in location of the junction between the first exhaust passage member and the second exhaust passage member is improved while the structure of the junction between the first exhaust passage member and the second exhaust passage member and the structure of the junction between the second exhaust passage member and the third exhaust passage member are simplified. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(16) According to another aspect, the single-front-wheel-including straddled vehicle of the present teaching preferably includes the following arrangement, in addition to the arrangement (13). The exhaust passage member is provided so that, when the vehicle is viewed rearward from the front, an angle formed between (5) the direction of the center line of the exhaust path at a downstream end of one or two third connection sections including the third junction point among the six sections of the first exhaust passage member and (6) the direction of the center line of the exhaust path at an upstream end of the one or two third connection sections falls within a range which includes 0 degrees and is smaller than an angle formed between (7) the direction of the center line of the exhaust path at the downstream end of the one or two third connection sections and (8) the downstream extension of the center line of the exhaust path of the fourth exhaust passage member.
   With this arrangement, even when the engine main body includes three or more cylinder holes, the degree of freedom in location of the junction between the first exhaust passage member and the second exhaust passage member is improved while the structure of the junction between the first exhaust passage member and the second exhaust passage member and the structure of the junction between the first exhaust passage member and the fourth exhaust passage member are simplified. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.
(17) According to another aspect, the single-front-wheel-including straddled vehicle of the present teaching preferably includes the following arrangement. The exhaust passage member includes a third exhaust passage member connected to the second exhaust passage member and a fourth exhaust passage member connected to the first exhaust passage member.

With this arrangement, even when the engine main body includes four or more cylinder holes, the degree of freedom in location of the junction between the first exhaust passage member and the second exhaust passage member is improved while the structure of the junction between the first exhaust passage member and the second exhaust passage member, the structure of the junction between the second exhaust passage member and the third exhaust passage member and the structure of the junction between the first exhaust passage member and the fourth exhaust passage member are simplified. This makes it further possible to easily avoid interference between the front wheel and the junction which is wide in the left-right direction, without caring about the bias of the flow of exhaust gas in the left-right direction. As a result, upsizing of the vehicle in the front-rear direction can be restrained while the exhaust gas purification performance of the vehicle is improved.

The second exhaust passage member of the present teaching may be connected to both the upstream intermediate portion and the upstream central portion of the first exhaust passage member. The second exhaust passage member of the present teaching may be connected to both the upstream central portion and the downstream central portion of the first exhaust passage member. The second exhaust passage member of the present teaching may be connected to both the downstream central portion and the downstream intermediate portion of the first exhaust passage member.

The shape of the enlarged portion of the present teaching is not particularly limited as long as a downstream portion of the enlarged portion in the flow direction of exhaust gas is wider in the left-right direction than an upstream portion of the enlarged portion in the flow direction of exhaust gas. The enlarged portion of the present teaching may have a stepped shape such that the width in the left-right direction increases stepwise in the flow direction of exhaust gas. The enlarged portion of the present teaching is preferably shaped such that the width in the left-right direction increases in multiple steps in the flow direction of exhaust gas. The enlarged portion of the present teaching is preferably tapered in shape such that the width in the left-right direction gradually increases in the flow direction of exhaust gas. The enlarged portion of the present teaching is preferably arranged such that, in the flow direction of exhaust gas, the length in the front-rear direction of the downstream portion of the enlarged portion is longer than the length in the front-rear direction of the upstream portion of the enlarged portion.

The straddled vehicle of the present teaching may include a plurality of first exhaust passage members. The straddled vehicle may include a plurality of second exhaust passage members. The straddled vehicle may include a plurality of third exhaust passage members. The straddled vehicle may include a plurality of fourth exhaust passage members. For example, the straddled vehicle of the present teaching may include two first exhaust passage members and two second exhaust passage members. For example, the straddled vehicle of the present teaching may include one first exhaust passage member, one second exhaust passage member, and two third exhaust passage members. For example, the straddled vehicle of the present teaching may include one first exhaust passage member, one second exhaust passage member, and two fourth exhaust passage members. For example, the straddled vehicle of the present teaching may include two first exhaust passage members, two second exhaust passage members, two third exhaust passage members, and two fourth exhaust passage members.

The catalyst of the present teaching may be a metal-substrate catalyst or a ceramic-base catalyst. The metal-base catalyst is a catalyst in which the substrate is made of metal. The ceramic-substrate catalyst is a catalyst in which the substrate is made of ceramic. The substrate of the metal-substrate catalyst is formed, for example, by alternately stacking metal corrugated plates and metal flat plates and winding them. The substrate of the ceramic-substrate catalyst is, for example, a honeycomb structured body. The catalyst of the present teaching is preferably a metal-substrate catalyst. Durability against vibrations is easily attained with the metal-substrate catalyst. Upsizing of the catalyst is therefore restrained when a catalyst of this type is mounted on a single-front-wheel-including straddled vehicle.

In the present teaching, the rear end of the downstream portion of the catalyst may be provided rearward of the central axis of the crankshaft in the front-rear direction of the vehicle. The rear end of the downstream portion of the catalyst is preferably provided forward of the central axis of the crankshaft in the front-rear direction of the vehicle. This improves the degree of freedom in the layout of the catalyst, and facilitates avoidance of interference between the engine main body and the catalyst. In the present teaching, the rear end of the downstream portion of the catalyst may be provided rearward of the front surface of the engine main body in the front-rear direction of the vehicle. The front surface of the engine main body is a surface which is viewable when the engine main body is viewed rearward from the front. The rear end of the downstream portion of the catalyst is preferably provided forward of the rearmost end of the front surface of the engine main body in the front-rear direction of the vehicle. This improves the degree of freedom in the layout of the catalyst, and facilitates avoidance of interference between the engine main body and the catalyst.

The straddled vehicle of the present teaching may include a plurality of catalysts which are independent from one another. The catalysts may be provided in series. In other words, the catalysts may be provided along the flow direction of exhaust gas. When a plurality of catalysts is provided, only at least one of these catalysts is required to have the arrangements as the present teaching. Alternatively, each of the catalysts may have the arrangements as the present teaching. Alternatively, the catalysts as a group may have the arrangements as in the present teaching. In other words, the catalysts may constitute one catalyst of the present teaching.

The vehicle body frame of the present teaching is a component supporting the engine main body. The vehicle body frame of the present teaching includes a supporting portion such as a bracket which is provided at the vehicle body frame to attach a member such as a vehicle body cover to the vehicle body frame. The vehicle body frame of the present teaching may have a monocoque structure which supports the engine main body and is integrally molded with part of a functional member such as a vehicle body cover.

The cylinder hole of the present teaching may be circular in cross section or elliptical in cross section. An upper portion of the cylinder hole of the present teaching may be provided rearward of a lower portion thereof. The upper portion of the cylinder hole of the present teaching may be provided forward of the lower portion thereof. The upper portion and the lower portion of the cylinder hole of the present teaching may be at the same position in the front-rear direction. In other words, the central axis of the cylinder hole may be along the front-rear direction of the vehicle.

The engine main body of the present teaching does not include an exhaust pipe, an intake pipe, an exhaust manifold, and an intake manifold. The engine main body of the present teaching does not include any exhaust system components including a catalyst and any intake system components. The engine main body of the present teaching is a 4-stroke engine. The 4-stroke type engine is an engine that repeats an intake process, a compression process, a combustion process (expansion stroke), and an exhaust process. The engine main body of the present teaching encompasses a parallel two-cylinder engine, a parallel three-cylinder engine, a parallel four-cylinder engine, a transverse V4 engine, a transverse V5 engine, and a transverse V6 engine. In each of the transverse V3 engine and the transverse V5 engine, the number of front combustion chambers may be two or more and the number of rear combustion chambers may be one or more. The combustion process is performed at different timings in the respective combustion chambers. The combustion process may be performed at the same timing in the combustion chambers. The engine main body of the present teaching may be a water-cooled engine. The engine main body of the present teaching may be an air-cooled engine. The engine main body of the present teaching may be integrated with a part of the casing of the transmission. The engine main body may be formed to be independent from the entire casing of the transmission. Exhaust gas exhausted from a front combustion chamber may or may not be merged with exhaust gas exhausted from a rear combustion chamber.

The exhaust passage member includes the atmosphere discharge port from which exhaust gas after being purified by the catalyst is discharged to the atmosphere. The exhaust passage member may include two atmosphere discharge ports. The two atmosphere discharge ports are preferably provided in a region leftward of and a region rightward of the center of the vehicle in the left-right direction, respectively. Two atmosphere discharge ports may be provided for one catalyst. When the straddled vehicle of the present teaching includes a plurality of catalysts which are not provided in series, an atmosphere discharge port may be provided for each catalyst. When the straddled vehicle of the present teaching includes a plurality of catalysts which are not provided in series, the number of atmosphere discharge ports may be one. In this case, exhaust gas having passed the catalysts is merged and then discharged from the atmosphere discharge port. When the straddled vehicle of the present teaching includes a plurality of catalysts which are not provided in series, the number of atmosphere discharge ports may be two. In this case, exhaust gas having passed the catalysts may be discharged from the atmosphere discharge ports, without being merged. Exhaust gas having passed the catalysts may be merged, and then separated into two streams and discharged from the atmosphere discharge ports.

The straddled vehicle of the present teaching encompasses a two-wheeled vehicle which has one front wheel and one rear wheel. The straddled vehicle of the present teaching encompasses a tricycle which has one front wheel and two rear wheels which are lined up in the left-right direction of the vehicle. A straddled vehicle indicates all types of vehicles on which an occupant rides in a manner of straddling a saddle. The straddled vehicle of the present teaching encompasses a sports motorcycle, an off-road motorcycle, a scooter, an engine-equipped bicycle, a moped, etc. The straddled vehicle of the present teaching may include more than two rear wheels. The straddled vehicle of the present teaching may be a leaning vehicle. The leaning vehicle is a vehicle which includes a vehicle body frame structured to lean rightward of the vehicle when turning right and lean leftward of the vehicle when turning left. In the present teaching, the front wheel includes a tire and a wheel main body that holds the tire. The same definition applies to the rear wheels.

The second exhaust passage member is connected to a part of the first exhaust passage member. The part is between both ends of the first exhaust passage member. For this reason, the center line of the exhaust path of the second exhaust passage member does not exist in the first exhaust passage member. In the present teaching, "a downstream extension of the center line of the exhaust path of the second exhaust passage member" indicates an extension line which extends from the downstream end of the center line of the exhaust passage of the second exhaust passage member and is parallel to the direction of the center line of the exhaust passage of the exhaust passage member at the downstream end of the second exhaust passage member. This definition is similarly applicable to "a downstream extension of the center line of the exhaust path of the third exhaust passage member" and "a downstream extension of the center line of the exhaust path of the fourth exhaust passage member".

In the present teaching, "the center line of the exhaust path of the first exhaust passage member downstream of the first junction point" indicates a part of the center line of the exhaust path of the first exhaust passage member, which linearly or substantially linearly extends downstream from the first junction point when the vehicle is viewed rearward from the front. For example, when the first exhaust passage member has a bent portion which is bent when the vehicle is viewed rearward from the front and is provided at a location downstream of the first junction point, "the center line of the exhaust path of the first exhaust passage member downstream of the first junction point" is provided upstream of the bent portion. This definition is similarly applicable to "the center line of the exhaust path of the second exhaust passage member downstream of the second junction point" and "the center line of the exhaust path of the first exhaust passage member downstream of the third junction point".

In the present teaching, "the center line of the exhaust path of the first exhaust passage member upstream of the first junction point" indicates a part of the center line of the exhaust path of the first exhaust passage member, which linearly or substantially linearly extends upstream from the first junction point when the vehicle is viewed rearward from the front. For example, when the first exhaust passage member has a bent portion which is bent when the vehicle is viewed rearward from the front and is provided at a location upstream of the first junction point, "the center line of the exhaust path of the first exhaust passage member downstream of the first junction point" is provided downstream of the bent portion. This definition is similarly applicable to "the center line of the exhaust path of the second exhaust passage member upstream of the second junction point" and "the center line of the exhaust path of the first exhaust passage member upstream of the third junction point".

In the present teaching, "an angle formed between the direction of the center line of the exhaust path of the first exhaust passage member downstream of the first junction point and the direction of the center line of the exhaust path of the first exhaust passage member upstream of the first junction point" indicates an angle formed between an infinite linear line parallel to "the center line of the exhaust path of the first exhaust passage member downstream of the first junction point" and "the center line of the exhaust path of the first exhaust passage member upstream of the first junction point". An angle formed between "the center line of the exhaust path of the first exhaust passage member downstream of the first junction point" and "the center line of the exhaust path of the first exhaust passage member upstream of the first junction point" is an obtuse angle or 180 degrees. Meanwhile, "an angle formed between the direction of the center line of the exhaust path of the first exhaust passage member downstream of the first junction point and the direction of the center line of the exhaust path of the first exhaust passage member upstream of the first junction point" is 0 degrees or an acute angle. In the present teaching, these definitions are similarly applied to expressions which use the direction of the center line of an exhaust path of a portion.

In the present teaching, when "two connection sections" include "the first junction point among six sections of the first exhaust passage member when the vehicle is viewed rearward from the front", the first junction point exists at the border between the two connection sections. In the present teaching, when "one connection section" includes "the first junction point among six sections of the first exhaust passage member when the vehicle is viewed rearward from the front", the first junction point exists in the one connection section. This definition is similarly applied to "two second connection sections" and "two third connection sections".

In the present teaching, an up-down direction, a left-right direction, and a front-rear direction of a vehicle are directions when a straddled vehicle vertically stands up on a horizontal road surface. A straddled vehicle encompasses a vehicle which cannot stand unaided. In a case of such a vehicle, an up-down direction, a left-right direction, and a front-rear direction of the vehicle are directions when the straddled vehicle vertically stands up on a horizontal road surface as the vehicle is supported by one occupant. In the present teaching, a left-right direction of a vehicle is a left-right direction for an occupant who rides on the vehicle and faces forward.

In the present teaching, "upstream" indicates upstream in the flow direction of exhaust gas. In the present teaching, "downstream" indicates downstream in the flow direction of exhaust gas.

In the present teaching, the central axis of an exhaust path is a line which passes the center of an exhaust path formed by an exhaust passage member when the vehicle is viewed in a particular direction. In the present teaching, the length of an exhaust path indicates the length of the center line of the exhaust path. The direction of the center line of an exhaust path at a point on the center line of the exhaust path in the present teaching is, when the center line of the exhaust path is a curved line, the tangential direction at the point.

In the present teaching, an end portion of a member indicates a portion constituted by an end and its surroundings of the member.

In the present teaching, an angle formed between linear lines indicates a smaller one of angles formed between the linear lines. An angle formed between linear lines may be 0 degrees. An angle formed between linear lines may be 90 degrees.

A passage member in the present teaching indicates members such as wall members which encompass a path to form the path. The path indicates a space where an object passes. The exhaust passage member indicates walls or the like which form the exhaust path by surrounding the exhaust path. The exhaust path indicates a space through which exhaust gas passes.

In the present teaching, a direction along an A direction is not limited to the direction in parallel to the A direction. The direction along the A direction includes a direction which intersects with the A direction at an angle which falls within the range from -45 degrees to 45 degrees. The same definition applies to other expressions using "along". The other expressions using "along" are, for example, "linear line along the A direction", "plural B are lined up along the A direction", and "a single B is provided along the A direction". The direction A does not indicate any specific direction. The direction A may be the horizontal direction or the front-rear direction.

In the present teaching, an expression "members A and B are lined up in an X direction" indicates the following state. No matter in what direction orthogonal to the X direction the entities A and B are viewed, a linear line or a curved line indicating the X direction passes both the entities A and B.
In the present teaching, an expression "members A and B are lined up in an X direction when viewed in a Y direction" indicates the following state. When the entities A and B are viewed in the Y direction, a linear line or a curved line indicating the X direction passes both of the entities A and B. When the members A and B are viewed in a direction different from the Y direction, the members A and B may not be lined up in the X direction.
In these two definitions, the members A and B may be in contact with each other. The members A and B may not be in contact with each other. A member C may be provided between the members A and B.

In the present teaching, an expression "an entity A is provided forward of an entity B" indicates the following state, unless otherwise specified. The entity A is provided in front of a plane which passes the front-most end of the entity B and is orthogonal to the front-rear direction. In this connection, the members A and B may or may not be lined up in the front-rear direction. The same applies to an expression "an entity A is provided rearward of an entity B" in the same condition with regard to the entity B. Furthermore, the same applies to expressions "an entity A is provided above or below an entity B", and "an entity A is provided rightward of or leftward of an entity B" in the same condition with regard to the entity B.

In the present teaching, an expression "an entity A is provided in front of an entity B" indicates the following state, unless otherwise specified. At least part of a rear surface of the entity A opposes at least part of a front surface of the entity B in the front-rear direction. Furthermore, the front-most end of the entity B is rearward of the front-most end of the entity A and the rear-most end of the entity B is forward of the rear-most end of the entity A. The rear surface of the entity A is a surface which is viewable when the entity A is viewed from the rear side. The rear surface of the entity A may be a single continuous surface or may be formed of plural non-continuous surfaces. The definition of the front surface of the entity B is similar to this. The same applies to expressions "an entity A is provided behind an entity B", "an entity A is provided straight above or below an entity B", and "an entity A is provided to the right of or to the left of an entity B".

In the present teaching, an expression "an entity A is in front of an entity B when viewed in an X direction different from the front-rear direction" indicates the following state, unless otherwise specified. When viewed in the X direction, at least part of the rear end of the entity A opposes at least part of the front end of the entity B in the front-rear direction. Furthermore, the front-most end of the entity B is rearward of the front-most end of the entity A and the rear-most end of the entity B is forward of the rear-most end of the entity A. When the entities A and B are viewed in a Y direction different from the X direction, at least part of the rear end of the entity A may not oppose at least part of the front end of the entity B in the front-rear direction. This applies to expressions "an entity A is provided behind an entity B when viewed in a particular direction", "an entity A is provided straight above or below an entity B when viewed in a particular direction", and "an entity A is provided to the right of or to the left of an entity B when viewed in a particular direction".

In the present teaching and the specification, an expression "an entity A is provided between entities B and C" indicates the following state, unless otherwise specified. A linear line passes the entities B, A, and C in this order. In other words, the entities B, A, and C are lined up in this order in the direction of a linear line.

In the present teaching, terms "including", "comprising", "having", and derivatives thereof are used to encompass not only listed items and equivalents thereof but also additional items.
In the present teaching, the terms "mounted", "connected", "coupled", and "supported" are used in broad sense. To be more specific, the terms encompass not only directly mounting, connection, coupling, and supporting but also indirect mounting, connection, coupling, and supporting. Furthermore, the terms "connected" and "coupled" do not merely indicate physical or mechanical connection and coupling. These terms encompass direct or indirect electric connection and coupling.

Unless otherwise defined, all terms (technical and scientific terms) used in this specification indicate meanings typically understood by a person with ordinary skill in the art in the technical field to which the present teaching belongs. Terms defined in typical dictionaries indicate meanings used in related technologies and in the context of the present disclosure. The terms are not interpreted ideally or excessively formally.

In this specification, the term "preferable" is non-exclusive. The term "preferable" means "preferable but not limited to". In this specification, an arrangement which is "preferable" exerts at least the above-described effects of the arrangement (1) above. In this specification, the term "may" is non-exclusive. The term "may" indicate "may but not must". In this specification, an arrangement which is explained by using the term "may" exerts at least the above-described effects of the arrangement (1) above.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching, the arrangements of the above-described different aspects may be variously combined. Before an embodiment of the present teaching is detailed, it is informed that the present teaching is not limited to the configurations and layout of elements described below and/or shown in drawings. The present teaching may be implemented as an embodiment other than the below-described embodiment. The present teaching may be implemented as an embodiment other than the below-described embodiment. Furthermore, the present teaching may be implemented by suitably combining below-described modifications.

### [Advantageous Effects]

In a single-front-wheel-including straddled vehicle of the present teaching, upsizing of the vehicle in the front-rear direction is restrained while a catalyst is provided in front of an engine main body, and the exhaust gas purification performance of the vehicle is improved.

### [Brief Description of Drawings]

FIG. 1A is a front view of a motorcycle of an embodiment of the present teaching, and FIG. 1B is a right side view of the motorcycle.
FIG. 2 is a right side view of a motorcycle of Specific Example 1 of the embodiment of the present teaching.
FIG. 3 is a front view of the motorcycle of Specific Example 1 of the embodiment of the present teaching.
FIG. 4 is an exploded perspective view of exhaust system components of Specific Example 1 of the embodiment of the present teaching.
FIG. 5 is a front view of a motorcycle of Modification 1 of the embodiment of the present teaching.
FIG. 6 is a front view of a motorcycle of Modification 2 of the embodiment of the present teaching.
FIG. 7 is a front view of a motorcycle of Modification 3 of the embodiment of the present teaching.
FIG. 8 is a front view of a motorcycle of Modification 4 of the embodiment of the present teaching.
FIG. 9 is a front view of a motorcycle of Modification 5 of the embodiment of the present teaching.

### [Description of Embodiments]

### (Embodiment of Present Teaching)

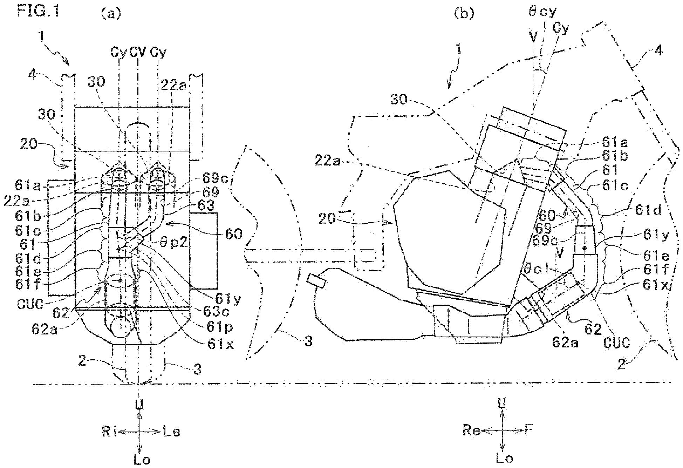

The following will describe an embodiment of the present teaching with reference to FIG. 1A and FIG. 1B. The present embodiment is an example of applying the present teaching to a motorcycle. FIG. 1A is a front view of a motorcycle 1. FIG. 1B is a right side view of a motorcycle 1. In the following description, a front-rear direction, a left-right direction, and an up-down direction are a front-rear direction of a vehicle, a left-right direction of a vehicle, and an up-down direction of a vehicle, respectively. Furthermore, in each figure, arrows F, Re, U, Lo, Le, and Ri indicate forward, rearward, upward, and downward, respectively.

The motorcycle 1 includes one front wheel 2. The motorcycle 1 includes a vehicle body frame 4. The motorcycle 1 includes an engine main body 20. The engine main body 20 is supported by the vehicle body frame 4. The engine main body 20 includes a plurality of cylinder holes 22a which are lined up in the left-right direction. The engine main body 20 includes a plurality of combustion chambers 30 which are partially formed by the respective cylinder holes 22a. The one front wheel 2 is provided in front of the engine main body 20. The one front wheel 2 is provided at the center CV of the motorcycle 1 in the left-right direction. Hereinafter, the center CV of the motorcycle 1 in the left-right direction will be referred to as vehicle center CV. The one front wheel 2 is arranged to be steerable in the left-right direction. The motorcycle 1 includes at least one rear wheel 3. While the number of the rear wheels 3 is one in FIG. 1A, the number may be more than one. The rear wheel 3 is provided behind the engine main body 20. The motorcycle 1 includes a catalyst unit 62 which is at least partially provided between the engine main body 20 and the front wheel 2 when the vehicle 1 is viewed rightward from the left or leftward from the right. The catalyst unit 62 includes a catalyst 62a which purifies exhaust gas exhausted from at least two combustion chambers 30. The catalyst 62a includes an upstream portion which is positioned upstream in the flow of exhaust gas and a downstream portion which is positioned downstream in the flow of exhaust gas. The front end of the upstream portion of the catalyst 62a is positioned forward of the front end of the downstream portion of the catalyst 62a. The front end of the upstream portion of the catalyst 62a is positioned above the front end of the downstream portion of the catalyst 62a. The motorcycle 1 includes an exhaust passage member 60 which forms an exhaust path 69 in which exhaust gas exhausted from the combustion chambers 30 flows.

The following explanation will be given with reference to FIG. 1B. Each cylinder hole 22a is provided so that, when the vehicle 1 is viewed leftward from the right, an angle θcy formed between the central axis Cy of the cylinder hole 22a and the up-down direction V is equal to or smaller than 45 degrees. Each cylinder hole 22a is provided so that, when the vehicle 1 is viewed leftward from the right, the angle θcy formed between the central axis Cy of the cylinder hole 22a and the up-down direction V is equal to or smaller than an angle θcl formed between the flow direction of exhaust gas in the catalyst 62a and the up-down direction V. With this arrangement, a part of the exhaust path 69 between the combustion chamber 30 and the upstream portion of the catalyst 62a has a certain length. Because this part of the exhaust path 69 has the certain length, a later-described arrangement for improving the bias of the flow of exhaust gas can be employed.

The following explanation will be given with reference to FIG. 1A. When the vehicle 1 is viewed rearward from the front, the catalyst 62a is arranged such that the center CUC at the center in the left-right direction of the upstream portion of the catalyst 62a is in a region rightward of the vehicle center CV. With this arrangement, when the vehicle 1 is viewed rearward from the front, the linear distances between the combustion chambers 30 and the upstream portion of the catalyst 62a are different from one another. To put it differently, these parts of the exhaust path 69 are not symmetrical in the left-right direction. In other words, the flow of exhaust gas is biased. However, interference between the upstream portion of the catalyst 62a and the front wheel 2 is easily avoidable. In the present embodiment, the region rightward of the vehicle center CV is equivalent to a first region of the present teaching. The first region may be a region leftward of the vehicle center.

The following explanation will be given with reference to FIG. 1A and FIG. 1B. The exhaust passage member 60 includes a first exhaust passage member 61 which connects a combustion chamber 30, which is provided so that the central axis Cy of the cylinder hole 22a is in the region rightward of the vehicle center CV, to the upstream portion of the catalyst 62a. An upstream end portion 61a, an upstream intermediate portion 61b, an upstream central portion 61c, a downstream central portion 61d, a downstream intermediate portion 61e, and a downstream end portion 61f are provided by dividing the first exhaust passage member 61 into six so that these portions are identical with one another in the length of the center line 69c of the exhaust path 69. The upstream end portion 61a, the upstream intermediate portion 61b, the upstream central portion 61c, the downstream central portion 61d, the downstream intermediate portion 61e, and the downstream end portion 61f are lined up in this order in the flow direction of exhaust gas. The exhaust passage member 60 includes a second exhaust passage member 63 which is connected to at least one of sections which are the upstream intermediate portion 61b, the upstream central portion 61c, the downstream central portion 61d, and the downstream intermediate portion 61e. The second exhaust passage member 63 is connected to a combustion chamber 30 which is provided so that the central axis Cy of the cylinder hole 22a is in the region leftward of the vehicle center CV. The region leftward of the vehicle center CV is equivalent to a second region of the present teaching.

A point where a downstream extension 63c of the center line 69c of the exhaust path 69 of the second exhaust passage member 63 is connected to the center line 69c of the exhaust path 69 of the first exhaust passage member 61 when the vehicle 1 is viewed rearward from the front is referred to as a first junction point 61p. An angle formed between the direction of the center line 69c of the exhaust path 69 of the first exhaust passage member 61 downstream of the first junction point 61p and the direction of the center line 69c of the exhaust path 69 of the first exhaust passage member 61 upstream of the first junction point 61p when the vehicle 1 is viewed rearward from the front is referred to as an angle θp1. In FIG. 1A, the angle θp1 is 0 degrees. The reference symbol θp1 is therefore not displayed in FIG. 1A. An angle formed between the direction of the center line 69c of the exhaust path 69 of the first exhaust passage member 61 downstream of the first junction point 61p and the downstream extension 63c of the center line 69c of the exhaust path 69 of the second exhaust passage member 63 when the vehicle 1 is viewed rearward from the front is referred to as an angle θp2. The exhaust passage member 60 is provided so that the angle θp1 falls within a range which includes 0 degrees and is smaller than the angle θp2. The exhaust passage member 60 includes an enlarged portion 61x provided between the first junction point 61p and the upstream portion of the catalyst 62a. In the exhaust path 69, a downstream portion of the enlarged portion 61x in the flow direction of exhaust gas is wider in the left-right direction than an upstream portion of the enlarged portion 61x in the flow direction of exhaust gas. Because the second exhaust passage member 63 is merged with the first exhaust passage member 61 from the left, the flow of exhaust gas is biased. The second exhaust passage member 63, however, is not connected to the upstream end portion 61a which is the most upstream one of the six sections of the first exhaust passage member 61. This prevents the flow of exhaust gas from being extremely biased. Furthermore, the second exhaust passage member 63 is not connected to the downstream end portion 61f which is the most downstream one of the six sections of the first exhaust passage member 61. With these arrangements, the exhaust path 69 between the upstream portion of the catalyst 62a and a junction 61y of the first exhaust passage member 61 and the second exhaust passage member 63 always has a certain length. In addition to this, the enlarged portion 61x, in which the downstream portion is wider in the left-right direction than the upstream portion of the enlarged portion 61x, is provided between the junction 61y and the upstream portion of the catalyst 62a. This makes it possible to restrain the bias of the flow of exhaust gas in the left-right direction. Furthermore, the second exhaust passage member is not connected to the upstream end portion which is the most upstream one of the six sections of the first exhaust passage member. This prevents the flow of exhaust gas from being extremely biased.

An influence of the bias of the flow of exhaust gas in the left-right direction can be restrained by the arrangements described above. On this account, the upstream portion of the catalyst 62a can be provided in the region rightward of the vehicle center CV without caring about the bias of the flow of exhaust gas in the left-right direction. To put it differently, it is possible to improve the degree of freedom in the layout of the upstream portion of the catalyst 62a in the left-right direction. Interference between the catalyst unit 62 and the front wheel 2 can therefore be easily avoidable even when the catalyst unit 62 including the large catalyst 62a is mounted. As a result, upsizing of the vehicle 1 in the front-rear direction can be restrained while the exhaust gas purification performance of the vehicle 1 is improved.

The front end of the downstream portion of the catalyst 62a is positioned rearward of the front end of the upstream portion of the catalyst 62a. On this account, interference between the downstream portion of the catalyst 62a and the front wheel is avoided no matter whether the downstream portion of the catalyst 62a is provided at the vehicle center CV, in the region leftward of the vehicle center CV, or in a region rightward of the vehicle center CV. The downstream portion of the catalyst 62a can be provided at the vehicle center CV, in the left region, or in the right region. When the upstream portion of the catalyst 62a is positionally different from the downstream portion of the catalyst 62a in the left-right direction, it is easy to employ a catalyst 62a in which the length in the flow direction of exhaust gas is relatively long as compared to the diameter. In short, the degree of freedom in the layout of the catalyst 62a is improved. For this reason, even when the catalyst 62a is upsized, the catalyst 62a can be provided at a location where interference between the upstream portion of the catalyst 62a and the front wheel is easily avoidable, in accordance with the shape of the catalyst 62a. As a result, upsizing of the vehicle 1 in the front-rear direction can be easily avoided. When the upstream portion of the catalyst 62a and the downstream portion of the catalyst 62a are provided both in the left region or both in the right region, it is easy to employ a catalyst 62a in which the length in the flow direction of exhaust gas is relatively short as compared to the diameter. In short, the degree of freedom in the layout of the catalyst 62a is improved. For this reason, even when the catalyst 62a is upsized, the catalyst 62a can be provided at a location where interference between the upstream portion of the catalyst 62a and the front wheel is easily avoidable, in accordance with the shape of the catalyst 62a. As a result, upsizing of the vehicle 1 in the front-rear direction can be easily avoided.

### (Specific Example 1 of Embodiment of Present Teaching)

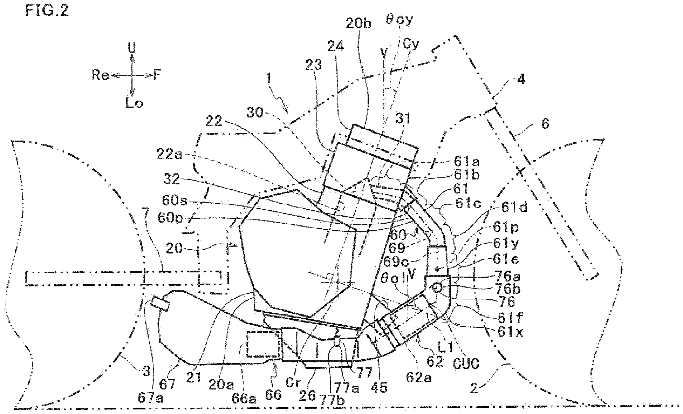

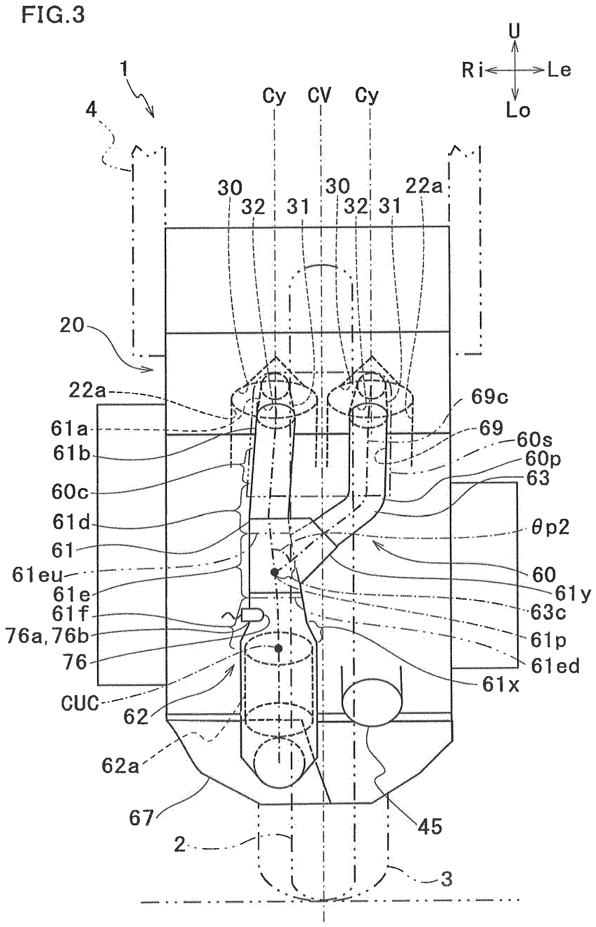

Specific Example 1 of the above-described embodiment of the present teaching will be described with reference to FIG. 2 and FIG. 3. FIG. 2 is a right side view of a motorcycle 1. FIG. 3 is a front view of the motorcycle 1. Hereinafter, members identical with those in the above-described embodiment of the present teaching are not explained again. Basically, Specific Example 1 of the embodiment of the present teaching encompasses all features of the embodiment of the present teaching described above. The following will describe arrangements which are different from those of the above-described embodiment of the present teaching.

### <Overall Structure of Motorcycle>

The following explanation will be given with reference to FIG. 2. The motorcycle 1 includes one front wheel 2, one rear wheel 3, and the vehicle body frame 4. The vehicle body frame 4 includes a head pipe 4a at a front portion. A steering shaft (not illustrated) is rotatably inserted through the head pipe 4a. An upper end portion of the steering shaft is connected to a handle unit (not illustrated). The upper end portions of a pair of front forks 6 are fixed to the handle unit 5. The lower end portions of the pair of front forks 6 support the front wheel 2. The front forks 6 are configured to be extendable to absorb impact in the up-down direction. An upper portion of the front wheel 2 is covered with a fender (not illustrated). The fender is not included in the front wheel 2.

Paired swingarms 7 are swingably supported by the vehicle body frame 4. The rear end portions of the paired swing arms 7 support the rear wheel 3. One end portion of a rear suspension (not illustrated) is attached to a position rearward of the swing center of each swing arm 7. The other end portion of the rear suspension is attached to the vehicle body frame 4. The rear suspension is configured to be extendable to absorb impact in the up-down direction. FIG. 2 and FIG. 3 show a state in which the front forks 6 and the rear suspension are maximally extended. In other words, these figures show a state in which the position of the vehicle body frame 4 is highest relative to the positions of the front wheel 2 and the rear wheel 3.

The vehicle body frame 4 supports a seat (not illustrated) and a fuel tank (not illustrated). The fuel tank is provided in front of the seat. The vehicle body frame 4 supports the engine main body 20. The engine main body 20 may be directly or indirectly connected to the vehicle body frame 4. The engine main body 20 is provided directly below the fuel tank. The engine main body 20 is provided below the upper end of the seat. The seat is a part on which a rider (driver) sits, and does not include a part on which a rider's waist or back leans. The seat does not include a part on which a tandem rider (passenger) sits. The front wheel 2 is provided in front of the engine main body 20 when viewed in the left or right direction. The rear wheel 3 is provided behind the engine main body 20 when viewed in the left or right direction. The maximum width in the left-right direction of the engine main body 20 is greater than the maximum width in the left-right direction of the front wheel 2. The maximum width in the left-right direction of the engine main body 20 is greater than the maximum width in the left-right direction of the rear wheel 3.

### <Structure of Engine Main Body>

The following explanation will be given with reference to FIG. 2 and FIG. 3. The engine main body 20 includes a crankcase member 20a and a cylinder portion 20b. The crankcase member 20a is provided at a lower portion of the engine main body 20. The cylinder portion 20b is provided at an upper portion of the engine main body 20. The cylinder portion 20b is connected to an upper end portion of the crankcase member 20a. The crankcase member 20a includes a crankcase 21 and an oil pan 26. The crankcase member 20a includes a crankshaft (not illustrated). The crankshaft is rotatably supported by the crankcase 21. Although not shown, the crankcase member 20a includes a transmission, a clutch, a starter motor, and a generator. These are also accommodated in the crankcase 21. The central axis Cr of the crankshaft is referred to as a crankshaft axis Cr. The crankshaft axis Cr is not a line segment existing only in a region where the crankshaft exists but a linear line with infinite length. The crankshaft axis Cr is along the left-right direction. More specifically, the crankshaft axis Cr is parallel to the left-right direction. The oil pan 26 is connected to the lower end of the crankcase 21. The border between the oil pan 26 and the crankcase 21 is substantially linear when viewed in the left or right direction. The border between the oil pan 26 and the crankcase 21 is along the front-rear direction when viewed in the left or right direction. The border is inclined with a negative slope in the forward direction. A right portion of the oil pan 26 is recessed. In other words, the right portion of the oil pan 26 is positioned above the left portion of the oil pan 26. At least part of the exhaust system components is disposed inside the recess of the oil pan 26. The oil pan 26 stores lubrication oil by which the engine main body 20 is lubricated. The crankcase member 20a includes an oil pump for sucking up the lubrication oil stored in the oil pan 26.

An oil filter 45 and an oil cooler (not illustrated) are provided at a front portion of the crankcase member 20a. The oil filter 45 is provided to the left of the oil cooler. The vehicle center CV is a plane passing the center in the left-right direction of the motorcycle 1. The vehicle center CV is a plane passing the center in the left-right direction of each of the front wheel 2 and the rear wheel 3, too. The oil cooler is provided to overlap the vehicle center CV. When the vehicle 1 is viewed rearward from the front, the oil filter 45 is provided in the region leftward of the vehicle center CV. The oil filter 45 protrudes forward from the front surface of the crankcase 21. Being similar to the oil filter 45, the oil cooler protrudes forward from the front surface of the crankcase 21. The oil filter 45 accommodates a filter body. The filter body removes contaminant in the lubrication oil. The oil filter 45 is detachably attached to the crankcase 21 in consideration of replacement of the filter body.

The oil filter 45 is preferably provided to overlap at least part of the catalyst 62a when the vehicle 1 is viewed rightward from the left or viewed leftward from the right. This makes it possible to easily avoid interference between the catalyst 62a and the front wheel 2 and interference between the oil filter 45 and the front wheel. The oil filter 45 is preferably provided in the region which is leftward of or rightward of the vehicle center CV. This makes it possible to easily avoid interference between the oil filter 45 and the front wheel 2, and upsizing of the vehicle 1 in the front-rear direction can be restrained.

The cylinder member 20b includes a cylinder body 22, a cylinder head 23, and a head cover 24. The cylinder body 22 is connected to the upper end portion of the crankcase 21. The cylinder head 23 is connected to the upper end portion of the cylinder body 22. The head cover 24 is connected to the upper end portion of the cylinder head 23. The cylinder body 22 includes two cylinder holes 22a. In other words, the cylinder member 20b includes a plurality of cylinder holes 22a. The two cylinder hole 22a are lined up along the left-right direction. A piston is slidably housed in each cylinder hole 22a. The two pistons are connected to one crankshaft via two connecting rods.

The central axis Cy of the cylinder hole 22a is referred to as a cylinder axis Cy. The cylinder axis Cy is not a line segment existing only in a region where the cylinder hole 22a exists but a linear line with infinite length. The two cylinder axes Cy are parallel to each other. When viewed in the left or right direction, the two cylinder axes Cy coincide with each other. The cylinder axis Cy does not intersect with the crankshaft axis Cr. The cylinder axis Cy may intersect with the crankshaft axis Cr. The cylinder axis Cy is along the up-down direction. When viewed in the left or right direction, the cylinder axis Cy is inclined forward or rearward with respect to the up-down direction. The cylinder axis Cy is inclined with a positive slope in the forward direction. The angle θcy between the cylinder axis Cy and the up-down direction V when viewed in the left or right direction is not limited to the angle shown in the figures. The angle θcy between the cylinder axis Cy and the up-down direction V when viewed in the left or right direction is equal to or smaller than 45 degrees.

The cylinder member 20b includes a plurality of (two) combustion chambers 30. The two combustion chambers 30 are lined up along the left-right direction. Each combustion chamber 30 is formed by the lower surface of the cylinder head 23, the cylinder hole 22a, and the upper surface of the piston. In other words, a part of the combustion chamber 30 is formed by the inner surface of the cylinder hole 22a. That is, when viewed in the left or right direction, the front ends of the two combustion chambers 30 are disposed forward of the crankshaft axis Cr.

A leading end portion of an ignition plug (not illustrated) is provided in the combustion chamber 30. The tip portion of the ignition plug generates a spark discharge. By this spark discharge, the air-fuel mixture in the combustion chamber 30 is ignited. In this specification, the air-fuel mixture is a gas in which air and fuel are mixed. The ignition plug is connected to an ignition coil (not illustrated). The ignition coil stores electric power to cause spark discharge of the ignition plug 1.

The cylinder head 23 includes a plurality of (two) internal exhaust passage members 31. Each internal exhaust passage member 31 forms a part of the exhaust passage member 60. The internal exhaust passage members 31 are connected to the combustion chambers 30. One internal exhaust passage member 31 is provided for each combustion chamber 30. The internal exhaust passage member 31 is provided for discharging the exhaust gas generated in the combustion chamber 30 from the combustion chamber 30. One combustion chamber exhaust port is provided in a surface of the cylinder head 23 which forms each combustion chamber 30. The combustion chamber exhaust port is shown in FIG. 2 and FIG. 3 but is not indicated by a reference symbol. The combustion chamber exhaust port is an upstream end of the internal exhaust passage member 31. The combustion chamber exhaust port is an upstream end of the exhaust passage member 60. Two exhaust ports 32 are provided in the outer surface of the cylinder head 23. The exhaust port 32 is a downstream end of the internal exhaust passage member 31. The two exhaust ports 32 are formed in the front surface of the cylinder head 23. The two exhaust ports 32 are lined up in the left-right direction. Two combustion chamber exhaust ports may be provided for one combustion chamber 30 and one exhaust port 32. If two combustion chamber exhaust ports are provided, the internal exhaust passage member 31 is bifurcated.

The cylinder head 23 includes a plurality of internal intake passage members (not illustrated). The internal intake passage members are connected to the combustion chambers 30. One internal intake passage member is provided for each combustion chamber 30. The internal intake passage member is provided to introduce air into the combustion chamber 30. The internal intake passage member is connected to an intake pipe or an intake manifold. One combustion chamber intake port (not illustrated) is provided in a surface of the cylinder head 23 which forms each combustion chamber 30. The combustion chamber intake port is a downstream end of the internal intake passage member. Two intake ports are provided in the outer surface of the cylinder head 23. The intake port is an upstream end of the internal intake passage member. The two intake ports are formed in the rear surface of the cylinder head 23. Two combustion chamber intake ports may be provided for one combustion chamber and one intake port.

An exhaust valve (not illustrated) for opening and closing the combustion chamber exhaust port is disposed in the internal exhaust passage member 31. One exhaust valve is provided for each combustion chamber exhaust port. An intake valve (not illustrated) for opening and closing the combustion chamber intake port is disposed in the internal intake passage member. One intake valve is provided for each combustion chamber intake port. The intake valve and the exhaust valve are driven by a valve driving device (not illustrated) housed in the cylinder head 23. The valve driving device operates in sync with the crankshaft. The valve operating mechanism may have a variable valve timing device. As the variable valve timing device, a known one is applied. The variable valve timing device is configured to change opening and closing timing of the intake valve and/or the exhaust valve.

The engine main body 20 includes injectors. Each injector is a fuel supplier that supplies fuel to the combustion chamber 30. One injector is provided for each combustion chamber 30. Each injector is positioned to inject fuel in the internal intake passage member. The injectors are connected to a fuel tank. A fuel pump is provided in the fuel tank. The fuel pump supplies fuel in the fuel tank toward the injectors with a pressure. Each injector is positioned to inject fuel in the combustion chamber 30. The engine main body 20 may have a carburetor as a fuel supplier, instead of the injector. The carburetor utilizes the negative pressure in the combustion chamber 30 to supply fuel into the combustion chamber 30.

The engine main body 20 includes an engine rotation speed sensor and an engine temperature sensor. The engine rotation speed sensor detects the rotation speed of the crankshaft, i.e., the engine rotation speed. The engine temperature sensor directly or indirectly detects the temperature of the engine main body 20.

### <Structure of Exhaust System>

The exhaust passage member 60 includes a muffler portion 67 which is provided downstream of the catalyst unit 62. The muffler portion 67 includes one atmosphere discharge port 67a exposed to the atmosphere. The exhaust passage member 60 forms one exhaust path 69 ranging from the combustion chambers 30 to the atmosphere discharge port 67a. Furthermore, the exhaust passage member 60 includes a second catalyst unit 66 which is provided downstream of the catalyst unit 62. The second catalyst unit 66 accommodates a second catalyst 66a. The catalyst 62a accommodated in the catalyst unit 62 is referred to as a first catalyst 62a. The first catalyst 62a purifies the exhaust gas most in the exhaust path 69 ranging from two combustion chambers 30 to the atmosphere discharge port 67a. In other words, the first catalyst 62a purifies more of the exhaust gas exhausted from the combustion chambers 30 than the second catalyst 66a in the exhaust path 69. In other words, the degree of contribution to the purification by the second catalyst 66a of the exhaust gas is lower than that of the first catalyst 62a. The second catalyst 66a is lower than the first catalyst 62a not in terms of the size of the catalyst or the amount of noble metal carried but the degree of actual contribution to the purification of exhaust gas. The second catalyst 66a is provided in the muffler portion 67. The second catalyst unit 66 includes the muffler portion 67. The exhaust gas exhausted from the two combustion chambers 30 of the engine main body 20 is purified when passing the first catalyst 62a and the second catalyst 66a. The exhaust gas is then exhausted to the atmosphere from the atmosphere discharge port 67a of the muffler portion 67.

The second exhaust passage member 63 is connected to a part of the first exhaust passage member 61. The part is between both ends of the first exhaust passage member 61. At the part of the first exhaust passage member 61 where the second exhaust passage member 63 is connected, a part of the first exhaust passage member 61 is cut out. In this regard, it is possible to assume the shape of the cutout part of the first exhaust passage member 61 based on the shape of the first exhaust passage member 61. To be more specific, the shape of the cutout part of the first exhaust passage member 61 is equivalent to smooth extension of the surroundings of the cutout part. In FIG. 2, a virtual line indicating the cutout part of the exhaust path 69 of the first exhaust passage member 61 at the junction 61y is displayed by a two-dot chain line. The center line 69c of the exhaust path 69 of the first exhaust passage member 61 at the junction 61y is determined in consideration of such a virtual line.

The first junction point 61p is a point where a downstream extension 63c of the center line 69c of the exhaust path 69 of the second exhaust passage member 63 is connected to the center line 69c of the exhaust path 69 of the first exhaust passage member 61 when the vehicle 1 is viewed rearward from the front. Among the six sections 61a to 61f of the first exhaust passage member 61, one or two sections including the first junction point 61p is referred to as a connection section. In Specific Example 1, the first junction point 61p is included in the downstream intermediate portion 61e. Hereinafter, the downstream intermediate portion 61e will be referred to as a connection section 61e. An angle formed between the direction of the center line 69c of the exhaust path 69 at the downstream end 61ed of the connection section 61e and the direction of the center line 69c of the exhaust path 69 at the upstream end 61eu of the connection section 61e when the vehicle 1 is viewed rearward from the front is referred to as an angle θp1a. In FIG. 3, the angle θp1a is 0 degrees or substantially 0 degrees. The reference symbol θp1a is therefore not displayed in FIG. 3. The angle θp1a is identical with or substantially identical with the above-described angle θp1. The angle θp1 is an angle formed between the direction of the center line 69c of the exhaust path 69 of the first exhaust passage member 61 downstream of the first junction point 61p and the direction of the center line 69c of the exhaust path 69 of the first exhaust passage member 61 upstream of the first junction point 61p when the vehicle 1 is viewed rearward from the front. An angle formed between the direction of the center line 69c of the exhaust path 69 at the downstream end 61ed of the connection section 61e and the downstream extension 63c of the center line 69c of the exhaust path 69 of the second exhaust passage member 63 is referred to as an angle θp2a. The angle θp2a is identical with or substantially identical with the above-described angle θp2. The reference symbol θp2a is therefore not displayed in FIG. 3. The angle θp2 is an angle formed between the direction of the center line 69c of the exhaust path 69 of the first exhaust passage member 61 downstream of the first junction point 61p and the downstream extension 63c of the center line 69c of the exhaust path 69 of the second exhaust passage member 63 when the vehicle 1 is viewed rearward from the front. The exhaust passage member 60 is provided so that the angle θp1a falls within a range which includes 0 degrees and is smaller than the angle θp2a.

The downstream extension of the center line 69c of the exhaust path 69 of the second exhaust passage member 63 is connected to the center line 69c of the exhaust path 69 of the first exhaust passage member 61 at the first junction point 61p not only when the vehicle 1 is viewed rearward from the front but also when the vehicle 1 is viewed leftward from the right or rightward from the left. The downstream extension of the center line 69c of the exhaust path 69 of the second exhaust passage member 63 may not be connected to the center line 69c of the exhaust path 69 of the first exhaust passage member 61 at the first junction point 61p when the vehicle 1 is viewed leftward from the right or rightward from the left.

An angle formed between the direction of the center line 69c of the exhaust path 69 of the first exhaust passage member 61 at the first junction point 61p and the up-down direction V when the vehicle 1 is viewed leftward from the right or viewed rightward from the left is referred to as an angle θ61p. In FIG. 2, the angle θ61p is 0 degrees. The reference symbol θ61p is therefore not displayed in FIG. 2.

The exhaust passage member 60 is provided so that, when the vehicle 1 is viewed rightward from the left or leftward from the right, the angle θ61p is equal to or smaller than the angle θcy formed between the cylinder axis Cy and the up-down direction V. The junction 61y between the first exhaust passage member 61 and the second exhaust passage member 63 is wide in the left-right direction. The junction 61y is formed of a part of the first exhaust passage member 61 and a part of the second exhaust passage member 63. This junction 61y which is wide in the left-right direction is provided so that its center line is close to the up-down direction V as compared to the direction of the cylinder axis Cy. This makes it further possible to easily avoid interference between the front wheel 2 and the junction 61y which is wide in the left-right direction, without caring about the bias of the flow of exhaust gas in the left-right direction. As a result, upsizing of the vehicle 1 in the front-rear direction can be restrained while the exhaust gas purification performance of the vehicle 1 is improved.

The exhaust passage member 60 is provided so that, when the vehicle 1 is viewed rightward from the left or leftward from the right, the above-described angle θ61p is equal to or smaller than an angle θc1 formed between the flow direction of exhaust gas in the catalyst 62a and the up-down direction V. The junction 61y between the first exhaust passage member 61 and the second exhaust passage member 63 is wide in the left-right direction. This junction 61y which is wide in the left-right direction is provided so that its center line is close to the up-down direction V as compared to the flow direction of exhaust gas in the catalyst 62a. This makes it further possible to easily avoid interference between the front wheel 2 and the junction 61y which is wide in the left-right direction, without caring about the bias of the flow of exhaust gas in the left-right direction. As a result, upsizing of the vehicle 1 in the front-rear direction can be restrained while the exhaust gas purification performance of the vehicle 1 is improved.

The exhaust passage member 60 includes a linear portion 60s which is provided upstream of the first junction point 61p. The linear portion 60s is formed of a part of the first exhaust passage member 61 and a part of the second exhaust passage member 63. The linear portion 60s is a region where, when the vehicle 1 is viewed rearward from the front, the center line 69c of the exhaust path 69 of a part of the first exhaust passage member 61 and the center line 69c of the exhaust path 69 of a part of the second exhaust passage member 63 are along the up-down direction and are lined up in the left-right direction. The linear portion 60s is provided between the combustion chamber 30 and the junction 61y between the first exhaust passage member 61 and the second exhaust passage member 63.With this arrangement, the degree of freedom in location of the junction 61y between the first exhaust passage member 61 and the second exhaust passage member 63 is improved while the structure of the exhaust passage member 60 between the combustion chamber 30 and the junction 61y between the first exhaust passage member 61 and the second exhaust passage member 63 is simplified. This makes it further possible to easily avoid interference between the front wheel 2 and the junction 61y which is wide in the left-right direction, without caring about the bias of the flow of exhaust gas in the left-right direction. As a result, upsizing of the vehicle 1 in the front-rear direction can be restrained while the exhaust gas purification performance of the vehicle 1 is improved.

The exhaust passage member 60 includes a part of the engine main body 20 and an exhaust pipe 60p which is detachably attached to the engine main body 20. The exhaust pipe 60p includes the first exhaust passage member 61 and the second exhaust passage member 63. The exhaust pipe 60p is connected to the engine main body 20 at the linear portion 60s. With this arrangement, the degree of freedom in location of the junction 61y between the first exhaust passage member 61 and the second exhaust passage member 63 is improved while the structure for connecting the engine main body 20 with the exhaust pipe 60p is simplified. This makes it further possible to easily avoid interference between the front wheel 2 and the junction 61y which is wide in the left-right direction, without caring about the bias of the flow of exhaust gas in the left-right direction. As a result, upsizing of the vehicle 1 in the front-rear direction can be restrained while the exhaust gas purification performance of the vehicle 1 is improved.

The center CUC at the center in the left-right direction of the upstream portion of the catalyst 62a is referred to as a catalyst upstream center CUC. The catalyst upstream center CUC is in the region rightward of the vehicle center CV. In other words, the catalyst upstream center CUC is in the first region of the present teaching. The catalyst upstream center CUC and the combustion chamber 30 connected to the first exhaust passage member 61 are both in the region rightward of the vehicle center CV, The first exhaust passage member 61 is therefore linear or substantially linear when the vehicle 1 is viewed rearward from the front. With this arrangement, the degree of freedom in location of the junction 61y between the first exhaust passage member 61 and the second exhaust passage member 63 is improved while the structure of the junction 61y is simplified. This makes it further possible to easily avoid interference between the front wheel 2 and the junction 61y which is wide in the left-right direction, without caring about the bias of the flow of exhaust gas in the left-right direction. As a result, upsizing of the vehicle 1 in the front-rear direction can be restrained while the exhaust gas purification performance of the vehicle 1 is improved.

The flow direction of exhaust gas in the catalyst 62a is along the up-down direction V when the vehicle 1 is viewed rearward from the front. The flow direction of exhaust gas in the catalyst 62a coincides with the up-down direction V when the vehicle 1 is viewed rearward from the front. The rear end of the downstream portion of the catalyst 62a is forward of the crankshaft axis Cr. The rear end of the downstream portion of the catalyst 62a is forward of the rearmost end of the front surface of the engine main body 20. The center CUC at the center in the left-right direction of the upstream portion of the catalyst 62a is positionally identical with the center in the front-rear direction of the upstream portion of the catalyst 62a. A linear line which passes the crankshaft axis Cr and is orthogonal to the cylinder axis Cy when the vehicle 1 is viewed leftward from the right or rightward from the left is referred to as a linear line L1. The center CUC in the front-rear direction of the catalyst 62a is directly above (in front of) of the linear line L1 when the vehicle 1 is viewed rightward from the left or leftward from the right.

The motorcycle 1 includes an oxygen sensor 76 which is configured to detect the oxygen density in exhaust gas between the junction 61y of the first exhaust passage member 61 and the upstream portion of the catalyst 62a. The exhaust passage member 60 includes an oxygen sensor attaching portion 76a to which the oxygen sensor 76 is attached. The oxygen sensor attaching portion 76a includes an oxygen sensor insertion hole 76b into which the oxygen sensor 76 is inserted. The oxygen sensor insertion hole 76b does not exist on the center line 69c of the exhaust path 69 of the first exhaust passage member 61 when the vehicle 1 is viewed rearward from the front. The oxygen sensor 76 is therefore not provided so that the axis of the oxygen sensor 76 is along the front-rear direction. With this arrangement, interference between the oxygen sensor 76 and the front wheel 2 is easily avoidable, while the detection accuracy of the oxygen density is secured. As a result, upsizing of the vehicle 1 in the front-rear direction can be restrained while the exhaust gas purification performance of the vehicle 1 is improved.

The motorcycle 1 includes an oxygen sensor 77 which is configured to detect the oxygen density in exhaust gas downstream of the catalyst 62a. The oxygen sensor 77 detects the oxygen density of exhaust gas between the first catalyst 62a and the second catalyst 66a. The exhaust passage member 60 includes an oxygen sensor attaching portion 77a to which the oxygen sensor 77 is attached. The oxygen sensor attaching portion 77a includes an oxygen sensor insertion hole 77b into which the oxygen sensor 77 is inserted.

The oxygen sensor insertion holes 76b and 77b are provided upstream of and downstream of the catalyst 62a, respectively. The oxygen sensor insertion hole 76b is referred to as an upstream insertion hole 76b, whereas the downstream oxygen sensor insertion hole 77b is referred to as a downstream insertion hole 77b. The oxygen sensor 76 inserted into the upstream insertion hole 76b is referred to as an upstream oxygen sensor 76, whereas the oxygen sensor 77 inserted into the downstream insertion hole 77b is referred to as a downstream oxygen sensor 77. The motorcycle 1 having both the upstream insertion hole 76b and the downstream insertion hole 77b is able to have both the upstream oxygen sensor 76 and the downstream oxygen sensor 77. Because the degradation of the catalyst 62a is detectable by this arrangement, it is possible to restrain the catalyst 62a from being upsized in consideration of the degradation of the catalyst 62a, and therefore to restrain upsizing of the vehicle 1 in the front-rear direction.

At the junction 61y between the first exhaust passage member 61 and the second exhaust passage member 63, the flow of exhaust gas in the first exhaust passage member 61 is biased leftward or rightward in the left-right direction. In this regard, the exhaust passage member 60 includes the enlarged portion 61x provided between the junction 61y of the first exhaust passage member 61 and the upstream portion of the catalyst 62a. This arrangement restrains the bias of the flow of exhaust gas in the left-right direction in the exhaust path 69 between the junction 61y of the first exhaust passage member 61 and the upstream portion of the catalyst 62a. Because the oxygen density of exhaust gas is detected by utilizing this section where the bias of the flow of exhaust gas is restrained, the degree of freedom in the layout of the oxygen sensor 76 is improved while the detection accuracy of oxygen density is secured. Therefore interference between the oxygen sensor 76 and the front wheel 2 is easily avoidable, while the detection accuracy of the oxygen density is secured. As a result, upsizing of the vehicle 1 in the front-rear direction can be restrained while the exhaust gas purification performance of the vehicle 1 is improved.

### <Specific Example of Exhaust Passage Member>

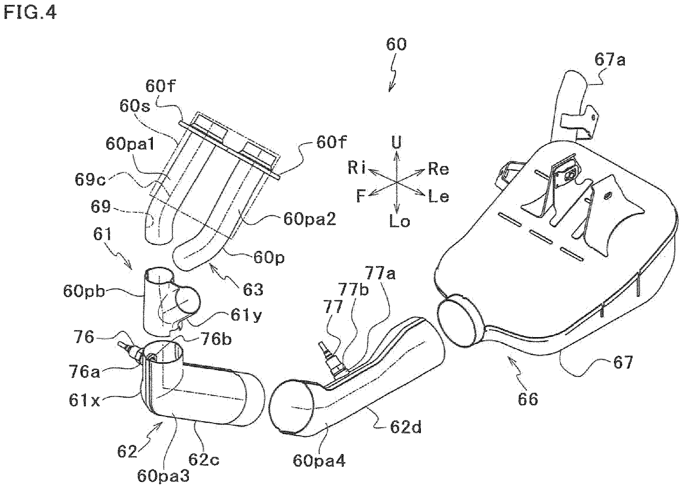

An example of specific structures of the exhaust system components in Specific Example 1 of the embodiment of the present teaching will be described with reference to FIG. 4. FIG. 4 is an exploded perspective view of the exhaust system components. The exhaust system components of Specific Example 1 of the embodiment of the present teaching may not have the structures shown in FIG. 4.

As described above, the exhaust passage member 60 includes a part of the engine main body 20 and an exhaust pipe 60p which is detachably attached to the engine main body 20. Components constituting the exhaust pipe 60p include cylindrical members 60pa1, 60pa2, 60pa3, and 60pa4. The components constituting the exhaust pipe 60p include a connecting member 60r connected to downstream end portions of the cylindrical members 60pa1 and 60pa2. The connecting member 60r constitutes the junction 61y. The connecting member 60r is preferably formed of two connected plate members. Each plate member is preferably formed by pressing. The two plate members constituting the connecting member 60r are lined up in the front-rear direction. With this arrangement, the size of the junction 61y between the first exhaust passage member 61 and the second exhaust passage member 63 is small in the front-rear direction. This improves the degree of freedom in location of the junction 61y between the first exhaust passage member 61 and the second exhaust passage member 63 and restrains upsizing of the vehicle 1 in the front-rear direction. The two plate members constituting the connecting member 60r are preferably connected in a detachable manner. The two plate members constituting the connecting member 60r may be connected in a non-detachable manner by, for example, welding. The connecting member 60r may be constituted by a single casting product having insertion holes into which the cylindrical members are inserted. Each of the cylindrical members 60pa3 and 60pa4 is constituted by two connected plate members. The cylindrical member 60pa3 constituted by the two plate members includes the oxygen sensor attaching portion 76a and the oxygen sensor insertion hole 76b.

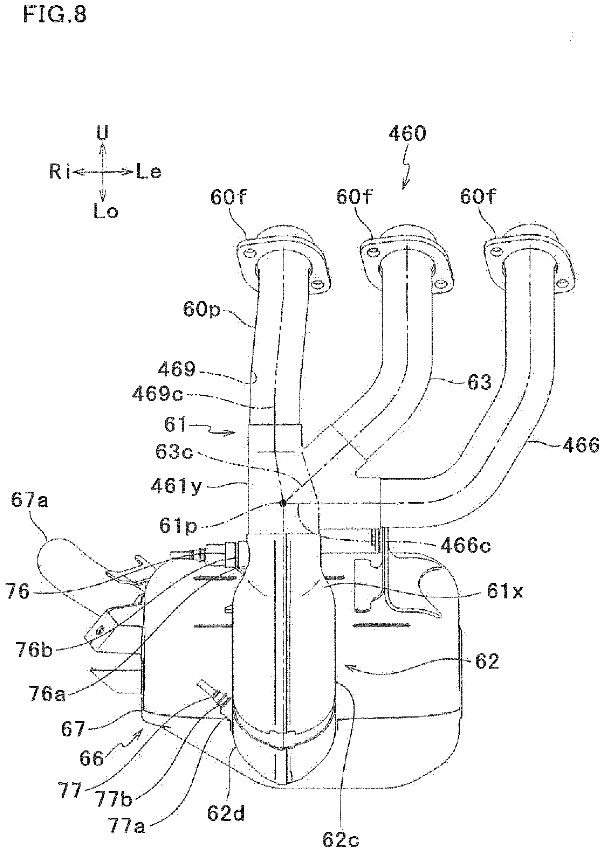

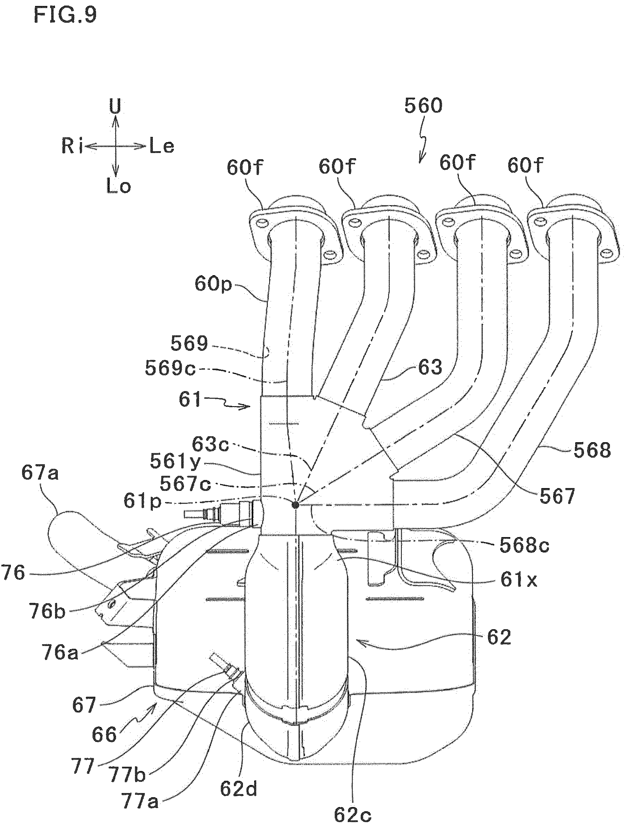

Components constituting the exhaust passage member 60 include a flange 60f provided at the outer periphery of the exhaust pipe 60p and a fastening member (not illustrated) by which the flange 60f is fixed to the engine main body 20. The flange is provided at the outer periphery of each of the cylindrical members 60pa1 and 60pa2. The fastening member may be a combination of a stud bolt and a nut or may be a bolt. The stud bolt or the bolt is preferably provided at a location not hidden behind the exhaust pipe 60p when the vehicle 1 is viewed rearward from the front (see FIG. 8 and FIG. 9). The stud bolt or the bolt is preferably provided at a location which is lined up with both the first exhaust passage member 61 and the second exhaust passage member 63 in the left-right direction when the vehicle 1 is viewed rearward from the front. The stud bolt or the bolt is preferably provided at a location which is lined up with the above-described linear portion 60s in the left-right direction when the vehicle 1 is viewed rearward from the front. Because this simplifies the attaching portion of the exhaust pipe 60p by this arrangement, the degree of freedom in the layout of the exhaust pipe 60p is improved and upsizing of the vehicle 1 in the front-rear direction is restrained.

The length of the catalyst unit 62 in the flow direction of exhaust gas is longer than the catalyst 62a in the flow direction of exhaust gas. Components constituting the catalyst unit 62 include one casing member 62c which accommodates the catalyst 62a. The casing member 62c is constituted by two connected plate members. The casing member 62c may be formed by pressing. The two plate members constituting the casing member 62c are lined up in the left-right direction. This improves the degree of freedom in the arrangement of inclination of the catalyst 62a in the flow direction relative to the front-rear direction. As a result, upsizing of the vehicle 1 in the front-rear direction can be restrained. The components constituting the catalyst unit 62 may include a plurality of casing members which accommodate the catalyst 62a. The casing members are provided to be lined up in the flow direction of exhaust gas. Each casing member may be constituted by two connected plate members. Each casing member may be formed by pressing. The two plate members constituting each casing member are preferably lined up in the left-right direction. The casing member 62c includes the enlarged portion 61x of the first exhaust passage member 61. The casing member may not include the enlarged portion 61x of the first exhaust passage member 61. The casing member 62c preferably includes at least part of the enlarged portion 61x of the first exhaust passage member 61.

The components constituting the catalyst unit 62 include a passage member 62d downstream of the casing member 62c. No catalyst 62a is provided in the passage member 62d. The passage member 62d is formed of two connected plate members. The passage member 62d may be formed by pressing. The passage member 62d includes the oxygen sensor attaching portion 77a and the oxygen sensor insertion hole 77b. The components constituting the catalyst unit 62 may include a passage member upstream of the casing member 62c. No catalyst 62a is provided in this passage member. This passage member may be constituted by two connected plate members. The passage member may be formed by pressing. The passage member may include the oxygen sensor attaching portion 76a and the oxygen sensor insertion hole 76b. The passage member preferably includes at least part of the enlarged portion 61x of the first exhaust passage member 61.

### (Modification 1 of Embodiment of Present Teaching)

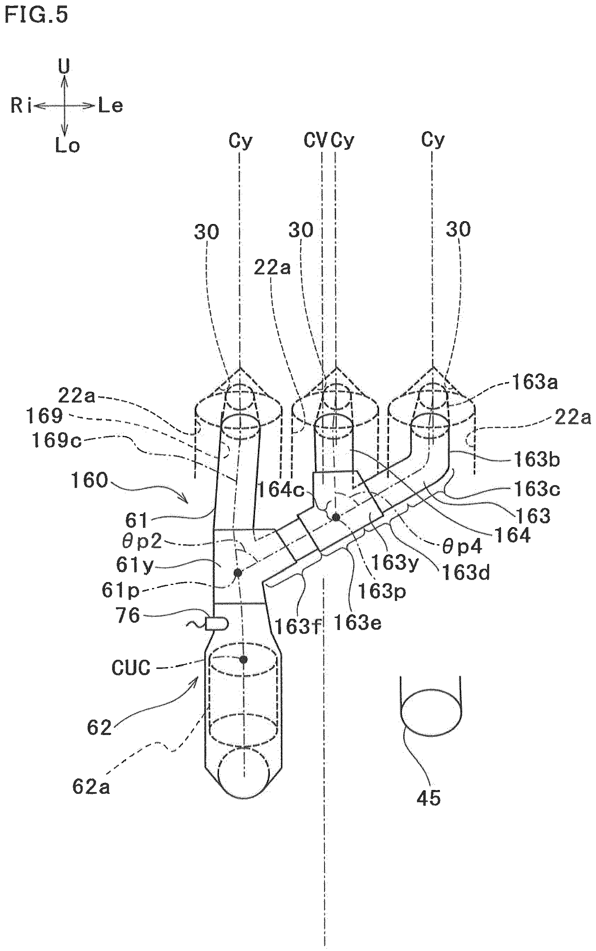

Modification 1 of the above-described embodiment of the present teaching will be described with reference to FIG. 5. FIG. 5 is a front view of a motorcycle. Basically, Modification 1 of the embodiment of the present teaching encompasses all features of the embodiment of the present teaching described above. Items identical with those in the embodiment above of the present teaching and its Specific Example 1 are not explained again. The following will describe arrangements which are different from those of the above-described embodiment of the present teaching and its Specific Example 1.

An engine main body of Modification 1 includes three combustion chambers 30 and three cylinder holes 22a. An exhaust passage member 160 of Modification 1 includes a first exhaust passage member 61, a second exhaust passage member 163, and a third exhaust passage member 164. The exhaust passage member 160 forms an exhaust path 169 ranging from three combustion chambers 30 to the atmosphere discharge port 67a. The second exhaust passage member 163 is structurally identical with the second exhaust passage member 63 which has been described in the embodiment of the present teaching and its Specific Example 1. The third exhaust passage member 164 is connected to a part of the second exhaust passage member 163. The part is between both ends of the second exhaust passage member 163. The third exhaust passage member 164 is connected to the combustion chamber 30 which is between the combustion chamber 30 connected to the first exhaust passage member 61 and the combustion chamber 30 connected to the second exhaust passage member 163. The combustion chamber 30 connected to the third exhaust passage member 164 is on the vehicle center CV. The combustion chamber 30 connected to the third exhaust passage member 164 may be in a region leftward of or rightward of the vehicle center CV.

A point where a downstream extension 164c of the center line 169c of the exhaust path 169 of the third exhaust passage member 164 is connected to the center line 169c of the exhaust path 169 of the second exhaust passage member 163 when the vehicle is viewed rearward from the front is referred to as a second junction point 163p. An angle formed between the direction of the center line 169c of the exhaust path 169 of the second exhaust passage member 163 downstream of the second junction point 163p and the direction of the center line 169c of the exhaust path 169 of the second exhaust passage member 163 upstream of the second junction point 163p when the vehicle is viewed rearward from the front is referred to as an angle θp3. In FIG. 5, the angle θp3 is 0 degrees. The reference symbol θp3 is therefore not displayed in FIG. 5. An angle formed between the direction of the center line 169c of the exhaust path 169 of the second exhaust passage member 163 downstream of the second junction point 163p and a downstream extension 164c of the center line 169c of the exhaust path 169 of the third exhaust passage member 164 when the vehicle is viewed rearward from the front is referred to as an angle θp4. The exhaust passage member 160 is provided so that the angle θp3 falls within a range which includes 0 degrees and is smaller than the angle θp4.

An upstream end portion 163a, an upstream intermediate portion 163b, an upstream central portion 163c, a downstream central portion 163d, a downstream intermediate portion 163e, and a downstream end portion 163f are provided by dividing the second exhaust passage member 163 into six so that these portions are identical with one another in the length of the center line 169c of the exhaust path 169. Among the six second sections 163a to 163f of the second exhaust passage member 163, one or two sections including the second junction point 163p is referred to as a second connection section. In Modification 1, the second junction point 163p is included in the downstream intermediate portion 163e. Hereinafter, the downstream intermediate portion 163e will be referred to as a second connection section 163e. An angle formed between the direction of the center line 169c of the exhaust path 169 at the downstream end of the second connection section 163e and the direction of the center line 169c of the exhaust path 169 at the upstream end of the second connection section 163e when the vehicle is viewed rearward from the front is referred to as an angle θp3a. In FIG. 5, the angle θp3a is 0 degrees or substantially 0 degrees. The reference symbol θp3a is therefore not displayed in FIG. 5. The angle θp3a is identical with or substantially identical with the above-described angle θp3. An angle formed between the direction of the center line 169c of the exhaust path 169 at the downstream end of the second connection section 163e and the downstream extension 164c of the center line 169c of the exhaust path 169 of the third exhaust passage member 164 is referred to as an angle θp4a. The angle θp4a is identical with or substantially identical with the above-described angle θp4. The reference symbol θp4a is not displayed in FIG. 5. The exhaust passage member 160 is provided so that the angle θp3a falls within a range which includes 0 degrees and is smaller than the angle θp4a.

According to Modification 1, even when the engine main body 20 includes three cylinder holes 22a, the degree of freedom in location of the junction 61y between the first exhaust passage member 61 and the second exhaust passage member 163 is improved while the structure of the junction 61y between the first exhaust passage member 61 and the second exhaust passage member 163 and the structure of the junction 163y between the second exhaust passage member 163 and the third exhaust passage member 164 are simplified. This makes it further possible to easily avoid interference between the front wheel 2 and the junction 61y which is wide in the left-right direction, without caring about the bias of the flow of exhaust gas in the left-right direction. As a result, upsizing of the vehicle 1 in the front-rear direction can be restrained while the exhaust gas purification performance of the vehicle 1 is improved.

### (Modification 2 of Embodiment of Present Teaching)

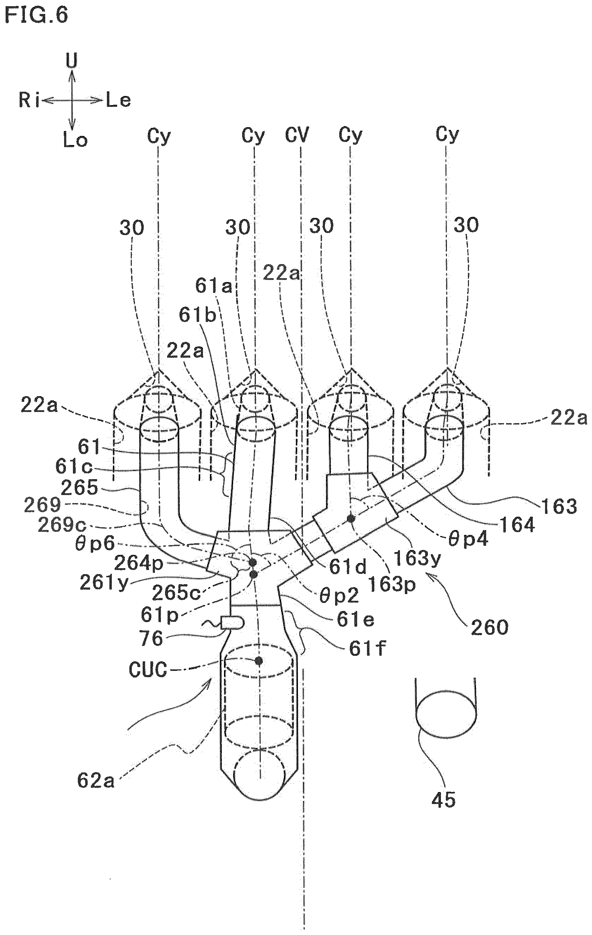

Modification 2 of the above-described embodiment of the present teaching will be described with reference to FIG. 6. FIG. 6 is a front view of a motorcycle. Basically, Modification 2 of the embodiment of the present teaching encompasses all features of the embodiment of the present teaching described above. Items identical with those in the embodiment above of the present teaching and its Specific Example 1 and Modification 1 are not explained again. The following will describe arrangements which are different from those of the above-described embodiment of the present teaching and its Specific Example 1 and Modification 1.

An engine main body of Modification 2 includes four combustion chambers 30 and four cylinder holes 22a. An exhaust passage member 260 of Modification 2 includes a first exhaust passage member 61, a second exhaust passage member 163, a third exhaust passage member 164, and a fourth exhaust passage member 265. The exhaust passage member 260 forms an exhaust path 269 ranging from four combustion chambers 30 to the atmosphere discharge port 67a. The combustion chamber 30 connected to the third exhaust passage member 164 is in a region leftward of the vehicle center CV. In other words, the combustion chamber 30 connected to the third exhaust passage member 164 is in the second region of the present teaching. The fourth exhaust passage member 265 is connected to a part of the first exhaust passage member 61. The part is between both ends of the first exhaust passage member 61. The combustion chamber 30 connected to the first exhaust passage member 61 is provided between the combustion chamber 30 connected to the fourth exhaust passage member 265 and the combustion chamber 30 connected to the second exhaust passage member 163.

A point where a downstream extension 265c of the center line 269c of the exhaust path 269 of the fourth exhaust passage member 265 is connected to the center line 269c of the exhaust path 269 of the first exhaust passage member 61 when the vehicle is viewed rearward from the front is referred to as a third junction point 264p. An angle formed between the direction of the center line 269c of the exhaust path 269 of the first exhaust passage member 61 downstream of the third junction point 264p and the direction of the center line 269c of the exhaust path 269 of the first exhaust passage member 61 upstream of the third junction point 264p when the vehicle is viewed rearward from the front is referred to as an angle θp5. In FIG. 6, the angle θp5 is 0 degrees. The reference symbol θp5 is therefore not displayed in FIG. 6. An angle formed between the direction of the center line 269c of the exhaust path 269 of the first exhaust passage member 61 downstream of the third junction point 264p and a downstream extension 265c of the center line 269c of the exhaust path 269 of the fourth exhaust passage member 265 when the vehicle is viewed rearward from the front is referred to as an angle θp6. The exhaust passage member 260 is provided so that the angle θp5 falls within a range which includes 0 degrees and is smaller than the angle θp6.

Among the six sections 61a to 61f of the first exhaust passage member 61, one or two sections including the third junction point 264p is referred to as a third connection section. In Modification 2, the third junction point 264p is included in the downstream intermediate portion 61e. Hereinafter, the downstream intermediate portion 61e will be referred to as a third connection section 61e. An angle formed between the direction of the center line 269c of the exhaust path 269 at the downstream end of the third connection section 61e and the direction of the center line 269c of the exhaust path 269 at the upstream end of the third connection section 61e when the vehicle is viewed rearward from the front is referred to as an angle θp5a. In FIG. 6, the angle θp5a is 0 degrees or substantially 0 degrees. The reference symbol θp5a is therefore not displayed in FIG. 6. The angle θp5a is identical with or substantially identical with the above-described angle θp5. An angle formed between the direction of the center line 269c of the exhaust path 269 at the downstream end of the third connection section 61e and the downstream extension 265c of the center line 269c of the exhaust path 269 of the fourth exhaust passage member 265 is referred to as an angle θp6a. The angle θp6a is identical with or substantially identical with the above-described angle θp6. The reference symbol θp6a is not displayed in FIG. 6. The exhaust passage member 260 is provided so that the angle θp5a falls within a range which includes 0 degrees and is smaller than the angle θp6a.

In addition to the effects of Modification 1, the following effects are obtained in Modification 2. Even when the engine main body 20 includes three or more cylinder holes 22a, the degree of freedom in location of the junction 261y between the first exhaust passage member 61 and the second exhaust passage member 63 is improved while the structure of the junction 261y between the first exhaust passage member 61 and the second exhaust passage member 163 and the structure of the junction 261y between the first exhaust passage member 61 and the fourth exhaust passage member 265 are simplified. This makes it further possible to easily avoid interference between the front wheel 2 and the junction 261y which is wide in the left-right direction, without caring about the bias of the flow of exhaust gas in the left-right direction. As a result, upsizing of the vehicle in the front-rear direction can be restrained while the exhaust gas purification performance of the vehicle is improved.

Even when the engine main body 20 includes four cylinder holes 22a, the degree of freedom in location of the junction 261y between the first exhaust passage member 61 and the second exhaust passage member 63 is improved while the structure of the junction 261y between the first exhaust passage member 61 and the second exhaust passage member 163, the structure of the junction 261y between the second exhaust passage member 163 and the third exhaust passage member 164, and the structure of the junction 261y between the first exhaust passage member 61 and the fourth exhaust passage member 265 are simplified. This makes it further possible to easily avoid interference between the front wheel 2 and the junction 261y which is wide in the left-right direction, without caring about the bias of the flow of exhaust gas in the left-right direction. As a result, upsizing of the vehicle in the front-rear direction can be restrained while the exhaust gas purification performance of the vehicle is improved.

### (Modification 3 of Embodiment of Present Teaching)

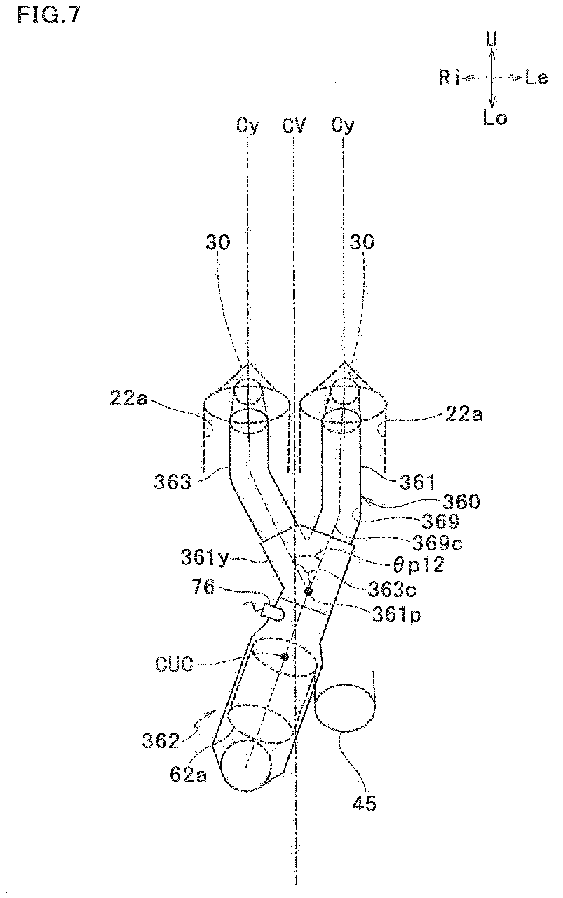

Modification 3 of the above-described embodiment of the present teaching will be described with reference to FIG. 7. FIG. 7 is a front view of a motorcycle. Basically, Modification 3 of the embodiment of the present teaching encompasses all features of the embodiment of the present teaching described above. Items identical with those in the embodiment above of the present teaching and its Specific Example 1 are not explained again. The following will describe arrangements which are different from those of the above-described embodiment of the present teaching and its Specific Example 1.

An exhaust passage member 360 of Modification 3 includes a first exhaust passage member 361 and a second exhaust passage member 363. The exhaust passage member 360 forms an exhaust path 369 ranging from two combustion chambers 30 to the atmosphere discharge port 67a. The first exhaust passage member 361 is connected to a combustion chamber 30 which is provided so that the cylinder axis Cy is in a region leftward of the vehicle center CV. The second exhaust passage member 363 is connected to a combustion chamber 30 which is provided so that the cylinder axis Cy is in a region rightward of the vehicle center CV. In Modification 3, the region leftward of the vehicle center CV is equivalent to the first region of the present teaching, and the region rightward of the vehicle center CV is equivalent to the second region of the present teaching. The second exhaust passage member 363 is merged with the first exhaust passage member 361 from the right. The center CUC in the left-right direction of the upstream portion of the catalyst 62a accommodated in the catalyst unit 362 is in the region rightward of the vehicle center CV. In other words, the catalyst upstream center CUC is in the second region of the present teaching. The flow direction of exhaust gas in the catalyst 62a intersects with the up-down direction when the vehicle is viewed rearward from the front. Apart from the arrangements above, the first exhaust passage member 361 and the second exhaust passage member 363 are structurally identical with the second exhaust passage member 63 which has been described in the embodiment of the present teaching and its Specific Example 1. A downstream extension 363c of the center line 369c of the exhaust path 369 of the second exhaust passage member 363 is connected to the center line 369c of the exhaust path 369 of the first exhaust passage member 361 at a first junction point 361p when the vehicle is viewed rearward from the front. An angle θp12 shown in FIG. 7 is equivalent to the angle θp2 of the embodiment of the present teaching and its Specific Example 1.

As described above, a combustion chamber 30 connected to the first exhaust passage member 361 is in the region leftward of the vehicle center CV, whereas the catalyst upstream center CUC is in the region rightward of the vehicle center CV. The combustion chamber 30 connected to the first exhaust passage member 361 and the catalyst upstream center CUC are separated from each other in the left-right direction. The distance between the combustion chamber 30 connected to the first exhaust passage member 361 and the catalyst upstream center CUC is therefore arranged to be advantageously long. Furthermore, because the second exhaust passage member 363 is connected to the first exhaust passage member 361, the distance between the combustion chamber 30 connected to the second exhaust passage member 363 and the catalyst upstream center CUC is arranged to be advantageously long. With this arrangement, the degree of freedom in location of the junction 361y between the first exhaust passage member 361 and the second exhaust passage member 363 is improved even if the length of the exhaust passage member 360 is taken into account. This makes it further possible to easily avoid interference between the front wheel 2 and the junction 361y which is wide in the left-right direction, without caring about the bias of the flow of exhaust gas in the left-right direction. As a result, upsizing of the vehicle in the front-rear direction can be restrained while the exhaust gas purification performance of the vehicle is improved.

### (Modification 4 of Embodiment of Present Teaching)

Modification 4 of the above-described embodiment of the present teaching will be described with reference to FIG. 8. FIG. 8 is a front view of a motorcycle. Basically, Modification 4 of the embodiment of the present teaching encompasses all features of the embodiment of the present teaching described above. Items identical with those in the embodiment above of the present teaching and its Specific Example 1 are not explained again. The following will describe arrangements which are different from those of the above-described embodiment of the present teaching and its Specific Example 1.

Being similar to Modification 1 shown in FIG. 5, an engine main body of Modification 4 includes three combustion chambers 30 and three cylinder holes 22a. An exhaust passage member 460 of Modification 4 includes a fifth exhaust passage member 466 connected to the first exhaust passage member 61. The exhaust passage member 460 forms an exhaust path 469 ranging from three combustion chambers 30 to the atmosphere discharge port 67a. The fifth exhaust passage member 466 is connected to a part of the first exhaust passage member 61. The part is between both ends of the first exhaust passage member 61. The fifth exhaust passage member 466 is connected to the first exhaust passage member 61 at a location substantially identical with the location where the second exhaust passage member 63 is connected to the first exhaust passage member 61. At the part of the first exhaust passage member 61 where the second exhaust passage member 63 and the fifth exhaust passage member 466 are connected, a part of the first exhaust passage member 61 is cut out. In FIG. 8, a virtual line indicating the cutout part of the exhaust path 469 of the first exhaust passage member 61 at the junction 461y is displayed by a two-dot chain line.

When the vehicle is viewed rearward from the front, a downstream extension 466c of the center line 469c of the exhaust path 469 of the fifth exhaust passage member 466 is connected to a first junction point 61p. The first junction point 61p is a point where a downstream extension 63c of the center line 469c of the exhaust path 469 of the second exhaust passage member 63 is connected to the center line 469c of the exhaust path 469 of the first exhaust passage member 61.

### (Modification 5 of Embodiment of Present Teaching)

Modification 5 of the above-described embodiment of the present teaching will be described with reference to FIG. 9. FIG. 9 is a front view of a motorcycle. Basically, Modification 5 of the embodiment of the present teaching encompasses all features of the embodiment of the present teaching described above, Items identical with those in the embodiment above of the present teaching and its Specific Example 1 are not explained again. The following will describe arrangements which are different from those of the above-described embodiment of the present teaching and its Specific Example 1.

Being similar to Modification 2 shown in FIG. 6, an engine main body of Modification 5 includes four combustion chambers 30 and four cylinder holes 22a. An exhaust passage member 560 of Modification 5 includes a sixth exhaust passage member 567 connected to the first exhaust passage member 61 and a seventh exhaust passage member 568 connected to the first exhaust passage member 61. The exhaust passage member 560 forms an exhaust path 569 ranging from four combustion chambers 30 to the atmosphere discharge port 67a. The sixth exhaust passage member 567 and the seventh exhaust passage member 568 are connected to a part of the first exhaust passage member 61. The part is between both ends of the first exhaust passage member 61. The sixth exhaust passage member 567 and the seventh exhaust passage member 568 are connected to the first exhaust passage member 61 at a location substantially identical with the location where the second exhaust passage member 63 is connected to the first exhaust passage member 61. At the part of the first exhaust passage member 61 where the second exhaust passage member 63, the sixth exhaust passage member 567, and the seventh exhaust passage member 568 are connected, a part of the first exhaust passage member 61 is cut out. In FIG. 9, a virtual line indicating the cutout part of the exhaust path 569 of the first exhaust passage member 61 at the junction 561y is displayed by a two-dot chain line.

When the vehicle is viewed rearward from the front, a downstream extension 567c of the center line 569c of the exhaust path 569 of the sixth exhaust passage member 567 is connected to a first junction point 61p. When the vehicle is viewed rearward from the front, a downstream extension 568c of the center line 569c of the exhaust path 569 of the seventh exhaust passage member 568 is connected to the first junction point 61p, too. The first junction point 61p is a point where a downstream extension 63c of the center line 569c of the exhaust path 569 of the second exhaust passage member 63 is connected to the center line 569c of the exhaust path 569 of the first exhaust passage member 61.

### [Reference Signs List]

1 motorcycle (straddled vehicle)
2 front wheel
3 rear wheel
4 vehicle body frame
20 engine main body
22a cylinder hole
30 combustion chamber
60, 160, 260, 360, 460, 560, exhaust passage member
61, 361 first exhaust passage member
61a upstream end portion
61b upstream intermediate portion
61c upstream central portion
61d downstream central portion
61e downstream intermediate portion
61f downstream end portion
61p, 361p first junction point
61x enlarged portion
62, 362 catalyst unit
62a catalyst
63, 163, 363 second exhaust passage member
63c, 363c downstream extension of center line of exhaust path of second exhaust passage member
69, 169, 269, 369, 469, 569 exhaust path
69c, 169c, 269c, 369c, 469c, 569c center line of exhaust path
163p second junction point
164 third exhaust passage member
164c downstream extension of center line of exhaust path of third exhaust passage member
264p third junction point
265 fourth exhaust passage member
265c downstream extension of center line of exhaust path of fourth exhaust passage member

## Claims

1. A straddled vehicle, comprising:
a vehicle body frame;
an engine main body which is supported by the vehicle body frame and includes a plurality of combustion chambers and cylinder holes lined up in a left-right direction of the vehicle, wherein each of the cylinder holes partially forms a combustion chamber;
a single front wheel which is provided in front of the engine main body in a front-rear direction of the vehicle and at the center of the vehicle in the left-right direction, the single front wheel being steerable in the left-right direction;
at least one rear wheel which is provided behind the engine main body in the front-rear direction;
a catalyst unit which is at least partially provided between the engine main body and the single front wheel when the vehicle is viewed rightward from the left or leftward from the right, the catalyst unit including a catalyst configured to purify exhaust gas exhausted from at least two of the plurality of combustion chambers, the catalyst being arranged so that an upstream portion is positioned upstream in a flow of the exhaust gas and a downstream portion is positioned downstream in the flow of the exhaust gas, a front end of the upstream portion in the front-rear direction being forward of a front end of the downstream portion in the front-rear direction, and the front end of the upstream portion being above the front end of the downstream portion in an up-down direction of the vehicle; and
an exhaust passage member which forms an exhaust path in which the exhaust gas exhausted from the plurality of combustion chambers flows,
each of the cylinder holes being arranged so that, when the vehicle is viewed rightward from the left or leftward from the right, an angle formed between a central axis of each of the cylinder holes and the up-down direction is equal to or smaller than 45 degrees and is equal to or smaller than an angle formed between the flow direction of the exhaust gas in the catalyst and the up-down direction,
when the vehicle is viewed rearward from the front, the catalyst being provided so that the center in the left-right direction of the upstream portion of the catalyst is in a region which is leftward of or rightward of the center of the vehicle in the left-right direction,
the exhaust passage member including:
a first exhaust passage member which connects a first combustion chamber of the combustion chambers to the upstream portion of the catalyst, the first combustion chamber being disposed so that the central axis of the cylinder hole is provided in a first region which is leftward of or rightward of the center of the vehicle in the left-right direction; and
a second exhaust passage member which is connected to at least one of an upstream intermediate portion, an upstream central portion, a downstream central portion, and a downstream intermediate portion among an upstream end portion, the upstream intermediate portion, the upstream central portion, the downstream central portion, the downstream intermediate portion, and a downstream end portion which are divisional portions of the first exhaust passage member, the divisional portions dividing the first exhaust passage member into six sections and being identical with one another in length of the center line of the exhaust path, the second exhaust passage member being further connected to a second combustion chamber of the plurality of combustion chambers, the second combustion chamber being disposed so that the central axis of the cylinder hole is provided in a second region which is opposite to the first region across the center of the vehicle in the left-right direction,
the exhaust passage member being arranged so that, when the vehicle is viewed rearward from the front, an angle formed between (i) the direction of the center line of an exhaust path of the first exhaust passage member downstream of a first junction point and (ii) the direction of the center line of the exhaust path of the first exhaust passage member upstream of the first junction point falls within a range which includes 0 degrees and is smaller than an angle formed between (I) the direction of the center line of the exhaust path of the first exhaust passage member downstream of the first junction point and (II) the downstream extension of the center line of the exhaust path of the second exhaust passage member, the first junction point being a point where a downstream extension of a center line of an exhaust path of the second exhaust passage member is connected to the center line of the exhaust path of the first exhaust passage member, and
the exhaust passage member further including an enlarged portion which is provided between the first junction point and the upstream portion of the catalyst and is arranged so that a downstream portion of the exhaust path of the enlarged portion in the flow direction of the exhaust gas is wider in the left-right direction than an upstream portion of the exhaust path of the enlarged portion.

2. The straddled vehicle according to claim 1, wherein the exhaust passage member is provided so that, when the vehicle is viewed rightward from the left or leftward from the right, an angle formed between the direction of the center line of the exhaust path of the first exhaust passage member at the first junction point and the up-down direction is equal to or smaller than an angle formed between the central axis of each of the cylinder holes and the up-down direction.

3. The straddled vehicle according to claim 1 or 2, wherein the exhaust passage member is provided so that, when the vehicle is viewed rightward from the left or leftward from the right, an angle formed between the direction of the center line of the exhaust path of the first exhaust passage member at the first junction point and the up-down direction is equal to or smaller than an angle formed between the flow direction of the exhaust gas in the catalyst and the up-down direction.

4. The straddled vehicle according to any one of claims 1 to 3, wherein the exhaust passage member is provided so that, when the vehicle is viewed rearward from the front, an angle formed between (a) the direction of the center line of the exhaust path at a downstream end of one or two connection sections including the first junction point among the six sections of the first exhaust passage member and (b) the direction of the center line of the exhaust path at an upstream end of the one or two connection sections falls within a range which includes 0 degrees and is smaller than an angle formed between (A) the direction of the center line of the exhaust path of the first exhaust passage member at the downstream end of the one or two connection sections and (B) the downstream extension of the center line of the exhaust path of the second exhaust passage member.

5. The straddled vehicle according to any one of claims 1 to 4, wherein the exhaust passage member includes an oxygen sensor attaching portion to which an oxygen sensor configured to detect oxygen density of the exhaust gas between the first junction point of the first exhaust passage member and the upstream portion of the catalyst is attached.

6. The straddled vehicle according to claim 5, wherein
the oxygen sensor attaching portion includes an oxygen sensor insertion hole into which the oxygen sensor is inserted, and
the oxygen sensor insertion hole does not exist on the center line of the exhaust path of the first exhaust passage member when the vehicle is viewed rearward from the front.

7. The straddled vehicle according to any one of claims 16, wherein the exhaust passage member includes a linear portion which is provided upstream of the first junction point and is a region where the center line of the exhaust path of a part of the first exhaust passage member and the center line of the exhaust path of a part of the second exhaust passage member are along the up-down direction and are lined up in the left-right direction when the vehicle is viewed rearward from the front.

8. The straddled vehicle according to any one of claims 1 to 7, wherein
the exhaust passage member includes a part of the engine main body and an exhaust pipe which is detachably attached to the engine main body, and
the exhaust pipe is connected to the engine main body at the linear portion.

9. The straddled vehicle according to any one of claims 1 to 8, wherein the center in the left-right direction of the upstream portion of the catalyst is in the first region.

10. The straddled vehicle according to any one of claims 1 to 8, wherein the center in the left-right direction of the upstream portion of the catalyst is in the second region.

11. The straddled vehicle according to any one of claims 1 to 10, wherein the exhaust passage member includes a third exhaust passage member which is connected to a part between both ends of the second exhaust passage member.

12. The straddled vehicle according to claim 11, wherein the exhaust passage member is provided so that, when the vehicle is viewed rearward from the front, an angle formed between (c) the direction of the center line of the exhaust path of the second exhaust passage member downstream of a second junction point and (d) the direction of the center line of the exhaust path of the second exhaust passage member upstream of the second junction point falls within a range which includes 0 degrees and is smaller than an angle formed between (C) the direction of the center line of the exhaust path of the second exhaust passage member downstream of the second junction point and (D) the downstream extension of the center line of the exhaust path of the third exhaust passage member, the second junction point being a point where a downstream extension of a center line of an exhaust path of the third exhaust passage member is connected to the center line of the exhaust path of the second exhaust passage member.

13. The straddled vehicle according to any one of claims 1 to 12, wherein the exhaust passage member includes a fourth exhaust passage member which is connected to a part between both ends of the first exhaust passage member.

14. The straddled vehicle according to claim 13, wherein the exhaust passage member is provided so that, when the vehicle is viewed rearward from the front, an angle formed between (e) the direction of the center line of the exhaust path of the first exhaust passage member downstream of a third junction point and (f) the direction of the center line of the exhaust path of the first exhaust passage member upstream of the third junction point falls within a range which includes 0 degrees and is smaller than an angle formed between (E) the direction of the center line of the exhaust path of the first exhaust passage member downstream of the third junction point and (F) the downstream extension of the center line of the exhaust path of the fourth exhaust passage member, the third junction point being a point where a downstream extension of a center line of an exhaust path of the fourth exhaust passage member is connected to the center line of the exhaust path of the first exhaust passage member.
